(19) Europäisches Patentamt
European Patent Office
Office européen des brevets

(11) **EP 1 062 640 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(21) Anmeldenummer: **99911778.1**

(22) Anmeldetag: **11.03.1999**

(51) Int Cl.$^7$: **G07C 9/00**, G06K 9/00

(86) Internationale Anmeldenummer:
**PCT/EP1999/001600**

(87) Internationale Veröffentlichungsnummer:
**WO 1999/046737 (16.09.1999 Gazette 1999/37)**

(54) **VERFAHREN ZUM VERIFIZIEREN DER AUTHENTIZITÄT EINES IM RAHMEN EINER PERSONENERKENNUNG AUFGENOMMENEN BILDES**

METHOD FOR VERIFYING THE AUTHENTICITY OF AN IMAGE RECORDED DURING A PERSONAL IDENTIFICATION PROCESS

PROCEDE POUR VERIFIER L'AUTHENTICITE D'UNE IMAGE ENREGISTREE AU COURS D'UN PROCESSUS D'IDENTIFICATION DE PERSONNE

(84) Benannte Vertragsstaaten:
**DE ES FR GB IT**

(30) Priorität: **12.03.1998 DE 19810792**

(43) Veröffentlichungstag der Anmeldung:
**27.12.2000 Patentblatt 2000/52**

(73) Patentinhaber: **ZN Vision Technologies AG 44801 Bochum (DE)**

(72) Erfinder:
• **KONEN, Wolfgang D-44805 Bochum (DE)**
• **BRAUCKMANN, Michael D-58456 Witten (DE)**
• **LIEBETRAU, André D-99734 Nordhausen (DE)**

(74) Vertreter: **Weigelt, Udo et al Grünecker, Kinkeldey Stockmair & Schwanhäusser Anwaltssozietät Maximilianstrasse 58 80538 München (DE)**

(56) Entgegenhaltungen:
**EP-A- 0 582 989      DE-C- 4 413 788
US-A- 5 570 434      US-A- 5 625 704
US-A- 5 719 951**

## Beschreibung

Die Erfindung betrifft ein Verfahren zum Verifizieren der Authentizität eines im Rahmen einer Personenerkennung aufgenommenen Bildes einer der Personenerkennung zu unterziehenden Person.

Bekannte Verfahren zur Personenerkennung, die beispielsweise auf einer Gesichtserkennung, wie sie in dem deutschen Patent 44 06 020 beschrieben ist, basieren, vergleichen nur Einzelaufnahmen der zu erkennenden Person mit Referenzbildern. Demnach wird in diesen Verfahren nur statische Information verarbeitet. Ein Nachteil derartiger Verfahren ist es allerdings, daß eine Zugangskontrolle, die mit einem solchen Verfahren arbeitet, durch Vorhalten eines Fotos oder einer maskenartigen Abbildung der Person leicht getäuscht werden kann.

Um die Gefahr einer derartigen Täuschung zu verringern, sind deshalb verschiedene Verfahren entwickelt worden.

Beispielsweise ist aus dem deutschen Gebrauchsmuster 2 950 660 bekannt, den Spektralbereich des Lichts, das zur Personenerkennung verwendet wird, durch eine IR-Filterscheibe auf einen Bereich einzuschränken, in dem ein Foto bzw. eine maskenartige Abbildung Reflektanzcharakteristika besitzt, die sich von denen eines tatsächlich aufgenommenen Gesichts unterscheiden. Ein Nachteil einer derartigen IR-Filterscheibe ist es allerdings, daß durch sie die Bildqualität verringert wird und damit die Anforderungen an die Qualität des Erkennungsverfahrens steigen. Zum anderen besteht die Gefahr, daß ein Bildmedium mit Reflektanzcharakteristika im IR-Bereich, die den Reflektanzcharakteristika des Gesichts einer Person im IR-Bereich ähnlich sind, gefunden wird, so daß mit einem derartigen Bildmedium wiederum eine Täuschung möglich ist.

Die US 5,625,704 beschreibt ein dynamisches Verfahren zur Personenerkennung.

Weiterhin sind im Stand der Technik Verfahren bekannt, in denen die Abbildung der zu erkennenden Person mit einem Stereo-Abbildungssystem aufgenommen werden. Beispielsweise wird in dem in dem Artikel "In-Your-Face Security" in PCWeek vom 26.03.1997 beschriebenen Gesichtserkennungssystem ein derartiges Verfahren benützt. Andere Verfahren, welche die dreidimensionale Struktur eines Gesichts ganz oder teilweise erfassen, sind die Laser-Triangulation oder die sogenannte Shape-from-Shading Methoden, wie sie in Attick, Griffin und Redlich in Neural Computation 8, 1321-1340, 1996 offenbart sind, die aus dem Grauwertverlauf bei gegebener Beleuchtungsrichtung Rückschlüsse auf Tiefeninformation des betrachteten Objekts erlauben. Mit diesen Verfahren können zwar Täuschungen, bei denen ein Bild planar vor das Aufnahmesystem gehalten wird, festgestellt werden, Täuschungen durch ein zylindrisch gebogenes Bild oder durch eine dreidimensionale Maske können allerdings nicht als Täuschung erkannt werden.

Außerdem sind im Stand der Technik Verfahren bekannt, in denen die Abbildungen der zu erkennenden Person mittels Thermographie-Verfahren aufgenommen werden, siehe hierzu beispielsweise das deutsche Patent 4 009 051. Hierbei wird zur Personenerkennung die von der zu erkennenden Person ausgesendete Wärmestrahlung erfaßt und mit einer vorgegebenen Referenz verglichen. Ein Nachteil dieser Verfahren ist es allerdings, daß die Vorrichtungen zur Durchführung dieser Verfahren, insbesondere die Thermographiekameras zur Aufnahme der zu erkennenden Person sehr teuer sind. Demnach lassen sich Thermographieverfahren in Zugangskontrollen, die vielerorts eingesetzt werden sollen, wie beispielsweise bei Bankautomaten zur Geldentnahme und/oder Tätigung von Bankgeschäften, nicht einsetzten.

Angesichts der oben diskutierten Nachteile der aus dem Stand der Technik bekannten Vorrichtungen, ist es die der Erfindung zugrunde liegende Aufgabe, ein Verfahren zum Verifizieren der Authentizität eines im Rahmen einer Personenerkennung aufgenommenen Bildes einer der Personenerkennung zu unterziehenden Person zu schaffen, in dem einerseits die Zuverlässigkeit bei der Verifizierung der Authentizität gegenüber dem Stand der Technik gesteigert wird und somit die durch eine Zugangskontrolle zu erzielende Sicherheit erhöht wird, und das andererseits kostengünstig realisierbar ist.

Diese Aufgabe wird durch ein Verfahren zum Verifizieren der Authentizität eines im Rahmen einer Personenerkennung aufgenommenen Bildes einer der Personenerkennung zu unterziehenden Person gelöst, das die Schritte eines Aufnehmens einer Sequenz von zeitlich aufeinanderfolgenden Einzelbildern der Person, und eines Feststellens der Authentizität des aufgenommenen Bildes, wenn aus wenigstens zwei aufeinanderfolgenden Einzelbildern der Sequenz intrinsische Bewegungen der Person ermittelt werden, umfaßt.

Da in dem erfindungsgemäßen Verfahren intrinsische Bewegungen einer zu erkennenden Person, also Bewegungen, die jede und damit auch eine zu erkennende Person ohne Veränderung ihres Schwerpunkts unbewußt ausführt, zum Verifizieren der Authentizität der aufgenommenen Bilder verwendet werden, wird die Authentizität nur festgestellt, wenn die aufeinanderfolgend aufgenommenen Einzelbilder tatsächlich von einer Person, die intrinsische Bewegungen ausführt, also von einer lebenden Person stammen. Demnach ist eine Täuschung einer das erfindungsgemäße Verfahren verwendenden Zugangskontrolle durch Vorhalten eines zylindrisch verbogenen Fotos oder einer maskenartigen Abbildung der zu erkennenden Person nicht mehr möglich, wodurch die von der Zugangskontrolle gewährleistete Sicherheit erheblich gesteigert wird.

Weiterhin kann das erfindungsgemäße Verfahren, da zu seiner Durchführung lediglich eine Aufnahmeeinrichtung und eine Bildauswerteeinrichtung erforderlich sind und da diese beiden Einrichtungen zur Durchführung der eigentlichen Bilderkennung bereits vorgesehen sind, relativ kostengünstig implementiert werden. Folglich eignet sich das erfindungsgemäße Verfahren zum Verifizieren der Authenzität eines aufgenommenen Bildes auch zum Einsatz in Zugangskontrollen, die vielerorts eingesetzt werden sollen, wie beispielsweise in Bankautomaten zur Geldentnahme und/oder Tätigung von Bankgeschäften.

Gemäß einer bevorzugten Weiterbildung des erfindungsgemäßen Verfahrens kann zum Ermitteln der intrinsischen Bewegungen wenigstens ein Differenzbild jeweils zweier aufeinanderfolgender Einzelbilder der Sequenz ausgewertet werden.

Durch Bildung von solchen Differenzbildem kann die im erfindungsgemäßen Verfahren zu verarbeitende Datenmenge erheblich reduziert werden, wodurch das Verfahren schneller durchgeführt werden kann. Dies führt unter anderem dazu, daß die Hardwareanforderungen zur Durchführung des Verfahrens reduziert werden können, was unmittelbar zur Verringerung der Gesamtkosten des Systems führt.

Weiterhin kann gemäß einer bevorzugten Ausgestaltung zum Ermitteln der intrinsischen Bewegungen ein Differenzbild ausgewertet werden, das aus einer UND-Verknüpfung zweier aufeinanderfolgender Differenzbilder resultiert.

Durch diese Ausgestaltung wird insbesondere ein Differenzbild erhalten, in dem Veränderungen, die sich beispielsweise durch eine Freigabe eines dominanten Hintergrunds in zwei aufeinanderfolgenden Einzelaufnahmen ergeben und sich demnach in dem Differenzbild zweier aufeinanderfolgenden Einzelaufnahmen widerspiegeln, stark reduziert sind. Anders ausgedrückt kann durch diese Ausgestaltung das letztlich zu beurteilende Differenzbild von Veränderungen, die nicht aus intrinsischen Bewegungen resultieren, befreit werden.

Gemäß einer anderen bevorzugten Weiterbildung kann jedes Differenzbild vor der Auswertung binarisiert wird.

Durch diese Maßnahme läßt sich wiederum eine starke Reduzierung der zu verarbeitenden Daten erzielen, was zu einer Erhöhung der Geschwindigkeit des Verfahrens und somit zu geringeren Hardwareanforderungen bei gleicher Leistungsfähigkeit führt.

Die Binarisierung kann hierbei beispielsweise mittels eines Schwellwerts durchgeführt werden, der durch Auswertung des Hintergrunds eines der Differenzbilder, beispielsweise durch Mittelung der Intensitäten solcher Pixel im Differenzbild, die im Bereich des statischen Hintergrunds liegen, ermittelt wird. Dies hat den Vorteil, daß die Binarisierung immer in Abhängigkeit von der gerade vorliegenden Aufnahmesituation bestimmt wird. Demnach kann sich das Verfahren durch diese Weiterbildung an umgebungsbedingte Änderungen, beispielsweise an wechselnde Licht- und/oder Kontrastverhältnisse, anpassen.

Weiterhin kann in jedem Differenzbild wenigstens ein Ausschnitt erhöhter Bewegung ausgewählt werden, und es können intrinsische Bewegungen festgestellt werden, wenn dieser wenigstens eine Ausschnitt in dem Differenzbild mit einem vorgegebenen Bereich, in dem intrinsische Bewegungen zu erwarten sind, konsistent ist.

Durch diese Ausbildung des erfindungsgemäßen Verfahrens kann wiederum die zu verarbeitende Datenmenge reduziert werden, was zu den bereits oben diskutierten Vorteilen führt.

Hierzu kann gemäß einer ersten Alternative der Ausschnitt erhöhter Bewegung durch eine vertikale und eine horizontale Ausdehnung definiert werden, wobei die vertikale Ausdehnung im wesentlichen durch einen Peak der Funktion der Produkte aus den Horizontalprojektionen mit den Horizontalvarianzen des Differenzbildes bestimmt wird, und die horizontale Ausdehnung im wesentlichen durch einen Peak der Funktion der Produkte aus den Vertikalprojektionen mit den Vertikalvarianzen des Differenzbildes bestimmt wird.

Vorteilhafterweise kann hierzu jede Funktion vor Bestimmung des entsprechenden Peaks mit einem Tiefpaßfilter geglättet werden. Durch diese Maßnahme kann hochfrequentes Rauschen in den Differenzbildern, das unter Umständen zu einer verschlechterten Bestimmung der Peaks und damit des Ausschnitts erhöhter Bewegung führt, vermieden werden. Insgesamt ergibt sich somit eine robustere Bestimmung des Ausschnitts erhöhter Bewegung.

Gemäß einer bevorzugten Weiterbildung der ersten Alternative können Ausschnitte aus dem Differenzbild ausgewählt werden, von denen erwartet wird, daß sie eine Symmetriebeziehung zueinander aufweisen, und intrinsische Bewegungen können festgestellt werden, wenn durch eine Korrelationsanalyse der entsprechenden Ausschnitte die Symmetriebeziehung verifiziert wird. Da intrinsische Bewegungen, beispielsweise im Gesicht einer zu erkennenden Person, in der Regel symmetrisch sind, liefert diese Ausgestaltung eine Überprüfung, ob es sich bei der in einem bestimmten Bereich festgestellten intrinsischen Bewegung tatsächlich um eine intrinsische Bewegung oder nur um eine andersartige Bewegung, ein Rauschen oder dergleichen handelt.

Darüber hinaus kann unabhängig oder zusammen mit dieser Überprüfung eine weitere Überprüfung durchgeführt werden, dahingehend, ob die erhöhte Bewegung in dem Bereich erhöhter Bewegung ungleichmäßig über diesen Bereich verteilt ist.

Hierdurch kann ausgeschlossen werden, daß kleine Änderungen, die sich in ungünstigen Fällen summieren können, in ihrer Summe fälschlicherweise als eine intrinsische Bewegung erkannt werden.

Gemäß einer zweiten Alternative können zum Feststellen intrinsischer Bewegungen auch eine von der vertikalen Position abhängige Funktion, die für eine gegebene vertikale Position durch das Produkt aus der Horizontalprojektion mit der Horizontalvarianz des Differenzbildes bestimmt wird, und eine von der horizontalen Position abhängige Funktion, die für eine gegebene horizontale Position durch das Produkt aus der Vertikalprojektion mit der Vertikalvarianz des Differenzbildes bestimmt wird, ausgewertet werden.

Vorzugsweise kann auch bei der zweiten Alternative jede Funktion vor Bestimmung des entsprechenden Peaks mit einem Tiefpaßfilter geglättet wird, um so ein hochfrequentes Rauschen aus den Differenzbildern zu filtern.

Gemäß einer vorteilhaften Weiterbildung kann zur Auswertung der oben bezeichneten Funktionen wenigstens ein Peak in der von der vertikalen Position abhängigen Funktion ermittelt werden, und wenigstens ein Peak in der von der horizontalen Position abhängigen Funktion ermittelt werden, und intrinsische Bewegungen können schließlich festgestellt werden, wenn diese Peaks in vertikaler bzw. horizontaler Richtung innerhalb vorbestimmter Grenzen liegen, die durch die vertikale bzw. die horizontale Ausdehnung von wenigstens einem Bereich gegeben sind, in dem intrinsische Bewegungen zu erwarten sind.

Analog zur ersten Alternative können auch für intrinsische Bewegungen, die mit der zweiten Alternative ermittelt worden sind, Überprüfungsverfahren durchgeführt werden, die auf der Tatsache beruhen, daß intrinsische Bewegungen in der Regel Symmetrien zeigen.

So können beispielsweise aus der von der vertikalen Position abhängigen Funktion und/oder aus der von der horizontalen Position abhängigen Funktion Abschnitte ausgewertet werden, von denen erwartet wird, daß sie in einer Symmetriebeziehung zueinander stehen, und intrinsische Bewegungen letztlich festgestellt werden, wenn durch eine Korrelationsanalyse der entsprechenden Abschnitte die Symmetriebeziehung verifiziert wird.

Um dieses Überprüfungsverfahren robuster gegenüber relativen Abweichungen der Abschnitte der Funktion, von denen erwartet wird, daß sie eine Symmetriebeziehung erfüllen, voneinander zu machen, können die Abschnitte vor der Korrelationsanalyse in bezug aufeinander normiert werden.

Zusätzlich oder alternativ zu diesem Überprüfungsverfahren können die von der vertikalen Position abhängige Funktion und/oder die von der horizontalen Position abhängige Funktion ausgewertet werden, und intrinsische Bewegungen können festgestellt werden, wenn durch eine Korrelationsanalyse ermittelt wird, daß die Werte der von der vertikalen Position abhängigen Funktion und/oder der von der horizontalen Position abhängigen Funktion über einen vorbestimmten Bereich einen ungleichmäßigen Verlauf zeigen.

Durch diese zusätzliche Überprüfung läßt sich ausschließen, daß kleine Änderungen, die sich in ungünstigen Fällen aufsummieren können, in ihrer Summe fälschlicherweise als eine intrinsische Bewegung erkannt werden.

Gemäß einer bevorzugten Weiterbildung der bisher diskutierten Ausbildungen des erfindungsgemäßen Verfahrens können intrinsische Bewegungen im Kopfbereich der zu erkennenden Person zum Verifizieren der Authentizität der aufgenommenen Bilder ermittelt werden.

Diese Weiterbildung hat den Vorteil, daß sich im Kopfbereich, im Vergleich zum gesamten Körper einer zu erkennenden Person, die meisten und die dominantesten intrinsischen Bewegungen finden. Demnach läßt sich das erfindungsgemäße Verfahren im Kopfbereich einer zu erkennenden Person am effektivsten durchführen.

Als Bereiche mit besonders ausgeprägten intrinsischen Bewegungen im Kopfbereich lassen sich beispielsweise die Mundregion und/oder die Backenregion und/oder die Nasenregion und/oder die Augenregion anführen.

In einer bevorzugten Ausbildung können die zu ermittelnden intrinsischen Bewegungen intrinsische Bewegungen in wenigstens zwei zueinander symmetrischen Regionen im Kopfbereichs der zu erkennenden Person sein, und diese wenigstens zwei zueinander symmetrischen Bereiche zur Bestimmung der Symmetrieachse des Kopfbereichs verwendet werden.

Mittels der auf diese Weise gefundenen Symmetrieachse kann ein zur Personenerkennung verwendbares Bild erzeugt werden, in dem ein frontoparallel gedrehter Kopfbereich in einen Kopfbereich mit gedrehter Symmetrieachse transformiert ist.

Zusätzlich oder alternativ hierzu kann mittels der gefundenen Symmetrieachse auch ein zur Personenerkennung verwendbares Bild der zu erkennenden Person erzeugt wird, das aus dem linken Kopfbereich und dem gespiegelten linken Kopfbereich zusammengesetzt ist, bzw. das aus dem rechten Kopfbereich und dem gespiegelten rechten Kopfbereich zusammengesetzt ist.

Beide Alternativen haben den Vorteil, daß für eine nachgeschaltete Personenerkennung bessere Bilder bereitgestellt werden können. So können bei einer Bilderkennung im Fall der ersten Alternative auch Aufnahmen verwendet werden, bei denen der Kopfbereich der zu erkennenden Person gegenüber der Vertikalen geneigt ist. Mittels der zweiten Alternative können auch solche Bilder zur Personenerkennung verwendet werden, in denen eine Bildhälfte überstrahlt ist, und die demnach für eine Personenerkennung unbrauchbar wären.

Gemäß einer anderen bevorzugten Weiterbildung aller zuvor diskutierter Ausführungsformen können vor dem Feststellen der Authentizität die Bereiche in den Einzelbildern, in denen intrinsische Bewegungen erwartet werden, aus den Einzelbildern extrahiert werden.

Diese Weiterbildung hat den Vorteil, daß die zum Feststellen der Authentizität erforderlichen Bilder aus beliebigen Videosequenzen extrahiert werden können.

Damit ist es lediglich erforderlich, daß die zu erkennende Person in das Gesichtsfeld der Aufnahmeeinrichtung tritt. Dies hat zum einen den Vorteil, daß aus einer Vielzahl von Einzelbildern jeweils zum Feststellen der Authentizität optimale Einzelbilder ausgewählt werden können. Weiterhin ist es nicht erforderlich, daß die der Personenerkennung zu unterziehende Person eine fest vorgegebene Position einnehmen muß, damit die zur Personenerkennung und zum Verifizieren der Authentizität erforderlichen Aufnahmen von der Person gemacht werden können.

Wie beim Feststellen der Authentizität kann zur Verringerung der zu verarbeitenden Daten beim Extrahieren der Bereiche vorteilhafterweise wenigstens ein Differenzbild jeweils zweier aufeinanderfolgender Einzelbilder der Sequenz ausgewertet werden.

Weiterhin kann auch beim Extrahieren der Bereiche ein Differenzbild, das aus einer UND-Verknüpfung zweier aufeinanderfolgender Differenzbilder resultiert, ausgewertet werden, falls das letztlich zu beurteilende Differenzbild von Veränderungen, die beispielsweise aus der Freigabe eines dominanten Teils des Hintergrunds resultieren, befreit werden soll.

Ebenso kann jedes Differenzbild vor der Auswertung binarisiert werden und die Binarisierung kann hier beispielsweise mittels eines Schwellwerts durchgeführt werden, der durch Auswertung des Hintergrunds eines der Differenzbilder, beispielsweise durch Mittelung der Intensitäten solcher Pixel im Differenzbild, die im Bereich des statischen Hintergrunds liegen, ermittelt wird. Durch diese Weiterbildung kann, wie bereits im Zusammenhang mit der Feststellung der intrinsischen Bewegungen oben diskutiert worden ist, die Menge der zu verarbeitenden Daten erheblich reduziert werden.

Analog zum Feststellen der intrinsischen Bewegungen kann in vorteilhafter Weise der Kopfbereich der zu erkennenden Person extrahiert wird.

Gemäß einer bevorzugten Weiterbildung kann der extrahierte Kopfbereich zur Personenerkennung auf eine vorbestimmte Standardgröße transformiert werden. Hierdurch lassen sich Größenvariationen, die in den aufwendigen Algorithmen zur Gesichtserkennung zu Problemen, insbesondere in Bezug auf die Rechenzeit, führen können, berücksichtigen.

Zum Extrahieren des Kopfbereichs können wenigstens zwei Kopfgrenzen in den entsprechenden Einzelbildern bzw. Differenzbildern, anhand derer der Kopfbereich aus den entsprechenden Einzelbildern bzw. den Differenzbildern extrahiert wird, ermittelt werden.

Gemäß einer ersten Alternative kann hierzu das Ermitteln der Kopfgrenze in den entsprechenden Einzelbildern bzw. Differenzbildern das Ermitteln der oberen und der linken Kopfgrenze umfaßt.

Gemäß einer zweiten Alternative kann zusätzlich auch die rechte Kopfgrenze bestimmt werden.

Zweckmäßigerweise, aber nicht darauf beschränkt, kann jede Kopfgrenze durch eine Kopfbegrenzungslinie definiert werden, die so verläuft, daß der Umriß des Kopfes im wesentlichen vollständig innerhalb der Kopfbegrenzungslinien liegt.

Gemäß einer bevorzugten Weiterbildung kann zur Bestimmung der oberen Kopfgrenze die Funktion der Vertikalprojektionen des binarisierten Differenzbildes ermittelt werden, und die obere Kopfgrenze durch das erste Maximum des Betrag der ersten Ableitung dieser Funktion, das über einem vorgegebenen Schwellwert liegt, definiert werden.

Falls hochfrequentes Rauschen eliminiert werden soll, können die Funktion der Vertikalprojektionen vor dem Definieren der Kopfgrenze mit einem Tiefpaßfilter geglättet werden.

Zur Bestimmung der linken Kopfgrenze kann die Funktion der Horizontalprojektionen des binarisierten Differenzbildes ermittelt wird, und die linke Kopfgrenze durch das erste Maximum des Betrag der ersten Ableitung dieser Funktion, das über einem vorgegebenen Schwellwert liegt, definiert werden.

Alternativ kann zur Bestimmung der linken Kopfgrenze auch das Differenzbild in eine Mehrzahl in vertikaler Richtung aufeinanderfolgende Streifen geteilt werden, wobei sich der erste Streifen in vertikaler Richtung nach unten an die ermittelte obere Kopfgrenze anschließt, in jedem Streifen kann dann die Funktion der Horizontalprojektionen des binarisierten Differenzbildes ermittelt werden, anschließend können die Beträge der ersten Ableitungen der auf diese Weise erhaltenen Mehrzahl an Funktionen der Horizontalprojektionen gebildet werden, die Summe der auf diese Weise gebildeten Mehrzahl an Beträgen können addiert werden, und schließlich kann die linke Kopfgrenze als das erste Maximum dieser Summe, das über einem vorgegebenen Schwellwert liegt, definiert werden.

Vorteil dieser zweiten Alternative ist es, daß durch die Streifen unterhalb der oberen Kopfgrenze nur der Kopfbereich erfaßt wird und der darunter liegende Schulterbereich, der zu ungenauen Ergebnissen bei der Ermittlung der linken Kopfgrenze führen kann, ausgeblendet wird.

Auch hierbei kann bzw. können die Funktion bzw. die Funktionen der Horizontalprojektionen vor dem Definieren der Kopfgrenze optional mit einem Tiefpaßfilter geglättet werden.

Analog zur ersten Alternative bei der Bestimmung der linken Kopfgrenze kann gemäß der bevorzugten Weiterbildung, in der auch die rechte Kopfgrenze ermittelt wird, zur Bestimmung der rechten Kopfgrenze die Funktion der Horizontalprojektionen des binarisierten Differenzbildes ermittelt werden, und die rechte Kopfgrenze durch das letzte Maximum des Betrag der ersten Ableitung dieser Funktion, das über einem vorgegebenen Schwellwert liegt, definiert werden.

Analog zur zweiten Alternative bei der Bestimmung der linken Kopfgrenze kann gemäß der bevorzugten Weiterbildung, in der auch die rechte Kopfgrenze ermittelt wird, zur Bestimmung der rechten Kopfgrenze das Differenzbild in eine Mehrzahl in vertikaler Richtung aufeinanderfolgende Streifen geteilt werden, wobei sich der erste Streifen in vertikaler Richtung nach unten an die ermittelte obere Kopfgrenze anschließt, in jedem Streifen die Funktion der Horizontalprojektionen des binarisierten Differenzbildes ermittelt werden, die Beträge der ersten Ableitungen der auf diese Weise erhaltenen Mehrzahl an Funktionen der Horizontalprojektionen gebildet werden, die Summe der auf diese Weise gebildeten Mehrzahl an Beträgen addiert werden, und die rechte Kopfgrenze als das letzte Maximum dieser Summe, das über einem vorgegebenen Schwellwert liegt, definiert werden.

Auch hierbei ist es möglich die Funktion bzw. die Funktionen der Horizontalprojektionen vor dem Definieren der Kopfgrenze mit einem Tiefpaßfilter zu glätten.

Gemäß einer bevorzugten Weiterbildung kann bei Bestimmung der Kopfgrenzen vorgesehen werden, daß zwei aufeinanderfolgende Einzelbilder bzw. hieraus gewonnene Differenzbilder zum Ermitteln der Kopfgrenzen nur verwendet werden, wenn eine Veränderung zwischen den zwei aufeinanderfolgenden Einzelbildern in einem vorbestimmten Bereich liegt.

Hierdurch ist es auf einfache Weise möglich, bereits vor der Ermittlung der Kopfgrenzen sicherzustellen, daß nur Differenzbilder zur Ermittlung verwendet, bei denen sichergestellt ist, daß aus ihnen hinreichend sichere Ergebnisse für die Kopfgrenzen erhalten werden können. Dadurch, daß die Veränderung zwischen zwei aufeinanderfolgenden Einzelbildern größer als ein vorbestimmter Wert sein muß (damit nach dieser bevorzugten Weiterbildung Kopfgrenzen berechnet werden), wird sichergestellt, daß aus beiden Bildern eine über das normale Rauschen hinausgehende Veränderung und somit eine tatsächliche Bewegung der zu erkennenden Person stattgefunden hat. Dadurch, daß die Veränderung zwischen zwei aufeinanderfolgenden Einzelbildern kleiner als ein vorbestimmter Wert sein muß (damit Kopfgrenzen berechnet werden), bleiben Differenzbilder, in denen sich eine zu starke Bewegung widerspiegelt, wie sie beispielsweise durch ein Wackeln der Aufnahmeeinrichtung oder eine extrem schnelle Bewegung der zu erkennenden Person zustandekommt, bei der Ermittlung der Kopfgrenzen unberücksichtigt.

Gemäß einer in bezug auf die erforderliche Rechenzeit besonders günstigen Ausbildung kann zur Ermittlung der Veränderung zwischen zwei aufeinander folgenden Einzelbildern eine Bewegungsstärke berechnet werden. Bei einem Graustufenbild kann die Bewegungsstärke im wesentlichen durch die Summe der Graupegel des Differenzbildes berechnet werden. In einem binarisierten Differenzbild läßt sich die Bewegungsstärke zweckmäßigerweise als Summe der 1-Pixel oder 0-Pixel des binarisierten Differenzbildes berechnen.

Entsprechend einer bevorzugten Weiterbildung können in dem Fall, in dem keine Kopfgrenzen ermittelt werden können, zum Extrahieren des Kopfbereichs vorbestimmte Kopfgrenzen verwendet werden.

Gemäß einer weiteren vorteilhaften Ausbildung können vorbestimmte Kopfgrenzen zum Extrahieren des Kopfbereichs verwendet werden, wenn eine der ermittelten Kopfgrenzen nicht innerhalb vorbestimmter Grenzen liegen. Alternativ kann der Schritt zum Bestimmen der Kopfgrenzen mit nachfolgenden Differenzbildern durchgeführt werden.

Hierdurch können die im Verfahren ermittelten Grenzen zusätzlich auf Plausibilität überprüft werden. Anders ausgedrückt wird demnach überprüft, ob in dem durch diese Kopfgrenzen definierten Bereich in bezug auf die Anordnung der Vorrichtung tatsächlich der Kopf einer Person zu erwarten wäre. Falls die ermittelten Kopfgrenzen nicht plausibel sind, werden schließlich vorbestimmte Kopfgrenzen angenommen. Durch diese zusätzliche Überprüfung kann die Qualität der Ermittlung der Kopfgrenze und damit letztendlich die Qualität der Verifizierung der Authentizität zusätzlich gesteigert werden.

Zweckmäßigerweise können in den zuvor beschriebenen Ausbildungen zur Ermittlung der Kopfgrenzen die untere bzw. die rechte und untere Kopfgrenze so festgelegt werden, daß ein quadratischer Kopfbereich aus den entsprechenden Einzelbildern bzw. Differenzbildern extrahiert wird.

Entsprechend einer bevorzugten Weiterbildung aller zuvor beschriebenen Ausführungen des erfindungsgemäßen Verfahrens kann aus zwei aufeinanderfolgenden Einzelbildern ein stabilisiertes Differenzbild gebildet wird, welches zum Ermitteln der intrinsischen Bewegungen und/oder zum Extrahieren der Bereiche, in denen intrinsische Bewegungen ermittelt werden sollen, ausgewertet wird.

Diese Weiterbildung kann zum einen unabhängig von und alternativ zum Extraktionsverfahren für Bereiche, in denen intrinsische Bewegungen erwartet werden, verwendet werden. Demnach lassen sich hier als Vorteil alle im Zusammenhang mit der Kopfgrenzenermittlung angeführten Vorteile nennen.

Zum anderen kann diese Weiterbildung auch dazu eingesetzt werden, die Genauigkeit der im Rahmen der Extraktion ermittelten Bereiche mit intrinsischen Bewegungen zu erhöhen.

Die Stabilisierung kann hierbei mittels einer Korrelationskorrektur durchgeführt werden.

Gemäß einer vorbestimmten Ausgestaltung kann die Korrelationskorrektur durch ein Template-Matching ausgeführt werden, das ein Berechnen des Differenzbildes umfaßt, wobei beim Berechnen des Differenzbildes das erste zur Bildung des Differenzbildes verwendete Einzelbild gegenüber dem zweiten zur Bildung des Differenzbildes verwendeten Einzelbild so verschoben ist, daß eine Korrelationsfunktion zwischen beiden Einzelbildern maximal ist.

Gemäß einer anderen vorteilhaften Weiterbildung werden in den zuvor beschriebenen Verfahren zwei aufeinanderfolgende Einzelbilder bzw. hieraus gewonnene Differenzbilder zum Ermitteln der intrinsischen Bewegungen nur verwendet, wenn die Veränderung zwischen den zwei aufeinanderfolgenden Einzelbildern in einem vorbestimmten Bereich liegt.

Hierdurch können bereits zu Beginn des erfindungsgemäßen Verfahrens aufeinanderfolgende Einzelbilder ausgewählt werden, mit denen hinreichend sichere Ergebnisse der Verifikation erhalten werden können.

Insbesondere ist es auf einfache Weise möglich, bereits vor der Ermittlung der intrinsischen Bewegungen sicherzustellen, daß nur Differenzbilder zur Ermittlung verwendet, bei denen sichergestellt ist, daß aus ihnen hinreichend sichere Ergebnisse erhalten werden können. Denn dadurch, daß die Veränderung zwischen zwei aufeinanderfolgenden Einzelbildern größer als ein vorbestimmter Wert sein muß (damit nach dieser bevorzugten Weiterbildung versucht wird, eine intrinsische Bewegung zu ermitteln), wird sichergestellt, daß aus beiden Bildern eine über das normale Rauschen hinausgehende Veränderung und somit eine tatsächliche Bewegung oder eine intrinsische Bewegung der zu erkennenden Person stattgefunden hat. Dadurch, daß die Veränderung zwischen zwei aufeinanderfolgenden Einzelbildern kleiner als ein vorbestimmter Wert sein muß (damit Kopfgrenzen berechnet werden), werden Differenzbilder, in denen sich eine zu starke Bewegungen widerspiegeln, wie sie beispielsweise durch ein Wackeln der Aufnahmeeinrichtung oder eine extrem schnelle Bewegung der zu erkennenden Person zustandekommen, nicht zur Ermittlung der intrinsischen Bewegungen verwendet.

Vorzugsweise läßt sich die Veränderung zwischen zwei aufeinander folgenden Einzelbildern durch eine Bewegungsstärke berechnen. Ebenso wie bei der Ermittlung der Kopfgrenzen, kann die Bewegungsstärke für ein Graustufenbild durch die Summe der Graupegel berechnet werden. Analog läßt sich für ein binäres Differenzbild die Bewegungsstärke zweckmäßigerweise durch die Summe der 1-Pixel oder 0-Pixel des binarisierten Differenzbildes berechnen.

Weitere Vorteile und Merkmale des erfindungsgemäßen Verfahren ergeben sich aus der Beschreibung detaillierter Ausführungsformen der Erfindung unter Bezugnahme auf die Zeichnung.

Es zeigen:

Fig. 1    ein Ablaufdiagramm einer ersten Ausführungsform des Verfahrens zum Verifizieren der Authentizität eines im Rahmen einer Personenerkennung aufgenommenen Bildes gemäß der vorliegenden Erfindung;

Fig. 2    ein Ablaufdiagramm einer zweiten Ausführungsform des Verfahrens zum Verifizieren der Authentizität gemäß der vorliegenden Erfindung;

Fig. 3    ein Ablaufdiagramm einer dritten Ausführungsform des Verfahrens zum Verifizieren der Authentizität gemäß der vorliegenden Erfindung;

Fig. 4    ein Ablaufdiagramm einer vierten Ausführungsform des Verfahrens zum Verifizieren der Authentizität gemäß der vorliegenden Erfindung;

Fig. 5    ein Ablaufdiagramm einer fünften Ausführungsform des Verfahrens zum Verifizieren der Authentizität gemäß der vorliegenden Erfindung;

Fig. 6    ein Ablaufdiagramm einer sechsten Ausführungsform des Verfahrens zum Verifizieren der Authentizität gemäß der vorliegenden Erfindung;

Fig. 7    ein Ablaufdiagramm zur Durchführung einer Korrelationsanalyse, die im Rahmen der vierten oder fünften Ausführungsform des Verfahrens zum Verifizieren der Authentizität gemäß der vorliegenden Erfindung, eingesetzt werden kann;

Fig. 8    ein Ablaufdiagramm einer siebten Ausführungsform des Verfahrens zum Verifizieren der Authentizität gemäß der vorliegenden Erfindung; und

Fig. 9    ein Ablaufdiagramm einer achten Ausführungsform des Verfahrens zum Verifizieren der Authentizität gemäß der vorliegenden Erfindung.

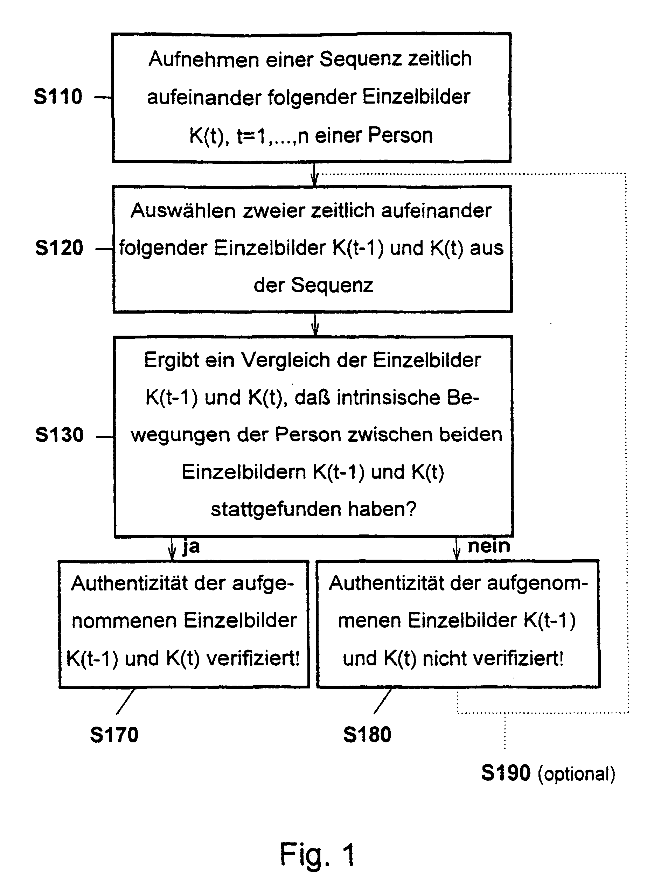

Fig. 1 zeigt ein Ablaufdiagramm eines erfindungsgemäßen Verfahrens zum Verifizieren der Authentizität eines im Rahmen einer Personenerkennung aufgenommenen Bildes einer der Personenerkennung zu unterziehenden Person.

In einem ersten Schritt S110 wird eine Sequenz zeitlich aufeinanderfolgender Einzelbilder K(t), t=1, ..., n einer Person aufgenommen. Hierzu werden zweckmäßigerweise aus dem Stand der Technik bekannte Videokameras, welche die Sequenz in digitalisierter Form aufnehmen, verwendet. Einzelbilder, die mit einer derartigen Videokamera aufgenommen werden, liegen in der Regel in Pixelform vor, wobei jedes Einzelbild c × r Pixel umfaßt, wenn c die Anzahl der Spalten und r die Anzahl der Zeilen des betreffenden Einzelbildes bezeichnet.

Im folgenden wird deshalb mit K(t) das gesamte Einzelbild zum Zeitpunkt t und mit $K_{cr}(t)$ das Pixel in der c-ten Spalte und der r-ten Reihe bezeichnet.

Die Einzelbilder werden im erfindungsgemäßen Verfahren mit einer Geschwindigkeit von 8-12 Bildern/Sekunde aufgenommen.

In Schritt S120 werden aus der aufgenommenen Sequenz der Einzelbilder zwei zeitlich aufeinanderfolgende Einzelbilder K(t-1) und K(t) ausgewählt.

Im darauffolgenden Schritt S130 werden die Einzelbilder K(t-1) und K(t) miteinander verglichen, um festzustellen, ob die der Personenerkennung unterzogene Person zwischen beiden Einzelbildern K(t-1) und K(t) intrinsische Bewegungen ausgeführt hat.

Hierzu können die beiden Einzelbilder K(t-1) und K(t) Pixel für Pixel miteinander verglichen werden, und die sich aus diesem Pixelvergleich ergebende Änderung kann mit einem vorgegebenen Schwellwert verglichen werden. Liegt demgemäß der Betrag der Änderung über dem vorgegebenen Schwellwert, hat die Person zwischen beiden Einzelbildern K(t-1) und K(t) eine intrinsische Bewegung durchgeführt, liegt der Betrag der Änderung hingegen unter dem Schwellwert, konnte keine intrinsischen Bewegungen der Person festgestellt werden. Dieser Pixel-mit-Pixel-Vergleich führt zu befriedigenden Ergebnissen, wenn den intrinsischen Bewegungen der Person keine zusätzlichen Bewegungen überlagert sind, d.h. wenn die Person sich gegenüber der Aufnahmeeinrichtung nicht oder nur minimal bewegt.

Wie der Vergleich im Detail durchzuführen ist, hängt von der Art der aufeinanderfolgenden Einzelbilder ab. Liegen die Einzelbilder beispielsweise als Graustufenbilder vor, kann der Betrag der Differenz der Graustufen zweier entsprechender Pixel in dem Einzelbild K(t-1) und K(t) als Maß für die Änderung eines Pixels, und die Summe der Beträge dieser Differenzen als ein Maß für die Änderung zwischen den beiden Einzelbildern K(t-1) und K(t), die schließlich mit dem vorgegebenen Schwellwert verglichen wird, angesehen werden.

Liegen die Einzelbilder beispielsweise in binarisierter Form (d.h. in Form von weißen oder schwarzen Pixeln) vor, ergibt sich die Änderung zwischen zwei Einzelbildern aus der Summe der sich in den Einzelbildern K(t-1) und K(t) entsprechenden Pixeln, die sich voneinander unterscheiden. Im Fall binarisierter Einzelbilder ist demnach diese Änderung mit einem vorgegebenen Schwellwert zu vergleichen. Die Binarisierung von Graustufenbildem wird im Zusammenhang mit der zweiten Ausführungsform (Schritt S240) noch im Detail beschrieben.

Ergibt der Vergleich in Schritt S130 schließlich, daß intrinsische Bewegungen der Person zwischen beiden Einzelbildern stattgefunden haben, wird in Schritt S170 die Authentizität der aufgenommenen Einzelbilder K(t-1) und K(t) verifiziert.

Ergibt der Vergleich hingegen, daß die Person zwischen den Einzelbildern K(t-1) und K(t) keine intrinsischen Bewegungen ausgeführt hat, kann in Schritt S180 die Authentizität der aufgenommenen Einzelbilder K(t-1) und K(t) nicht verifiziert werden.

In diesem Fall besteht die Möglichkeit, das Verfahren abzubrechen, und falls dieses Verfahren im Rahmen einer Zugangskontrolle eingesetzt wird, kann der Zugang verweigert werden. Alternativ kann, wie durch Schritt S190 dargestellt, zu Schritt S120 zurückgesprungen werden, und das Verfahren zum Verifizieren der Authentizität kann mit zwei weiteren Einzelbildern, beispielsweise K(t) und K(t+1) erneut durchgeführt werden.

Die durch den Schritt S190 dargestellte Schleife kann j-mal durchlaufen werden, wobei j eine vorbestimmte Zahl ist, die höchstens n-1 ist.

Alternativ zum Vergleich der Einzelbilder K(t-1) und K(t) kann zur Reduzierung der zu verarbeitenden Datenmenge aus beiden Einzelbildern ein Differenzbild D(t) = K(t) - K(t-1) gebildet werden und schließlich das Differenzbild D(t) direkt untersucht werden, dahingehend, ob die Person intrinsische Bewegungen zwischen den beiden Einzelbildern K(t-1) und K(t) ausgeführt hat.

Gemäß einer weiteren Alternative der ersten Ausführungsform kann anstelle des Differenzbildes D(t) auch eine UND-Verknüpfung zweier aufeinanderfolgender Differenzbilder D(t) und D(t-1) zur Ermittlung der intrinsischen Bewegungen ausgewertet werden. Diese Alternative eignet sich insbesondere, wenn sich starke Veränderungen in zwei aufeinanderfolgenden Einzelbildern durch Freigabe eines dominanten Hintergrunds, beispielsweise einer Beleuchtungsquelle, in zwei aufeinanderfolgenden Einzelbildern ergeben, und sich in dem Differenzbild widerspiegeln. Demnach kann durch diese Alternative das letztlich zu beurteilende Differenzbild von Änderungen befreit werden, die nicht aus intrinsischen Bewegungen resultieren.

Da in dieser Alternative zwei Differenzbilder D(t) und D(t+1) verwendet werden, sind zum Erstellen dieser beiden Differenzbilder drei aufeinanderfolgende Einzelbilder K(t-1), K(t) und K(t+1) erforderlich.

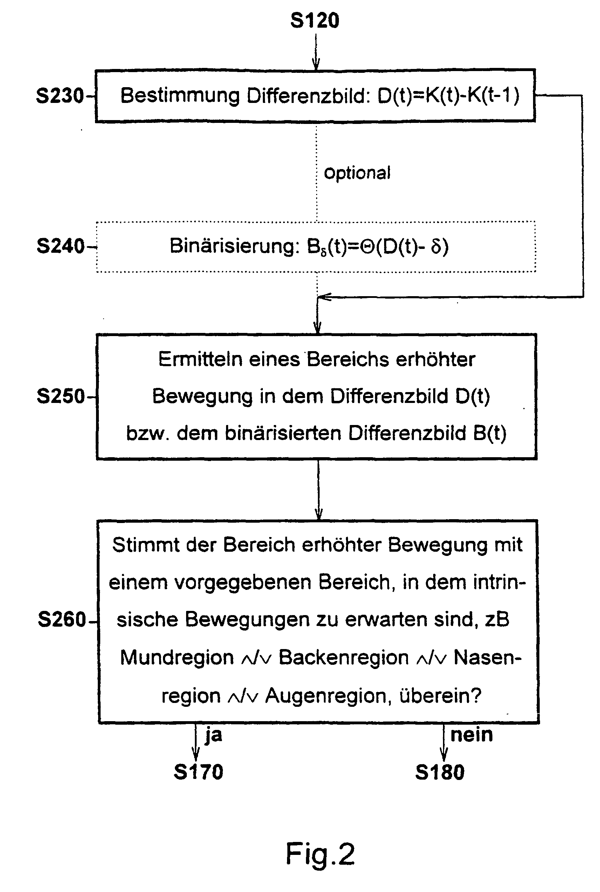

In Fig. 2 ist ein Ablaufdiagramm einer zweiten Ausführungsform des erfindungsgemäßen Verfahrens dargestellt.

Diese zweite Ausführungsform stellt im wesentlichen eine Alternative des Schritts S130 in der ersten Ausführungsform dar.

Demnach werden gemäß der zweiten Ausführungsform ebenfalls zuerst die Schritte S110 und S120 durchlaufen, d.h. es wird eine Sequenz zeitlich aufeinanderfolgender Einzelbilder aufgenommen und aus dieser Sequenz werden zwei zeitlich aufeinanderfolgende Einzelbilder ausgewählt.

Nach dem Schritt S120 wird in Schritt S130 das Differenzbild D(t) aus den Einzelbildern K(t) und K(t-1) ermittelt.

In dem optionalen Schritt S240 kann dieses Differenzbild nach folgender Gleichung binarisiert werden:

$$B_\delta(t) = \Theta(D(t)-\delta). \tag{1}$$

Hierbei stellt $\delta$ einen vorbestimmten Schwellwert dar, und $\theta(I)$ bezeichnet die Stufenfunktion, d.h. $\theta(I) = 0$, für $I < 0$ und $\theta(I) = 1$ für $I \geq 0$.

Der Schwellwert $\delta$ kann hierbei fest vorgegeben oder durch Auswertung des Hintergrunds ermittelt werden.

Im letzteren Fall bietet es sich an, den Schwellwert $\delta$ als Funktion der oberen m Zeilen des Differenzbilds zu definieren, da diese Zeilen nur statischen Hintergrund zeigen und somit von 0 verschiedene Werte im Differenzbild auf ein Rauschen, beispielsweise durch die Aufnahmevorrichtung, zurückzuführen sind. Demgemäß wird das Rauschen unterdrückt, wenn nur Graustufenwerte, die über diesem Schwellwert liegen, berücksichtigt werden. Folglich ist als Schwellwert der maximale Wert, der in den obersten m Zeilen des Differenzbilds gefunden wird, d.h.

$$\delta = \max_{c,\, r < m}\; D_{cr}(t), \tag{2}$$

zu verwenden.

Im nächsten Schritt S250 wird im Differenzbild D(t) bzw. im binarisierten Differenzbild B(t) wenigstens ein Bereich erhöhter Bewegung ermittelt.

Hierzu kann beispielsweise ein Rahmen beliebiger Größe vorgegeben werden und über das entsprechende Differenzbild geführt werden, wobei bei jeder Verschiebung die Bewegung, d.h. die Anzahl der Summe der Pixel mit dem Wert 1 oder alternativ der Pixel mit dem Wert 0, berechnet wird. Der Rahmen der Verschiebung mit der größten Summe definiert schließlich den Bereich erhöhter Bewegung.

Nachdem der Bereich erhöhter Bewegung in dem Differenzbild bzw. dem binarisierten Differenzbild ermittelt worden ist, wird überprüft, ob dieser Bereich mit einem vorgegebenen Bereich, in dem intrinsische Bewegungen zu erwarten sind, übereinstimmt.

Falls dies der Fall ist, kann die Authentizität der aufgenommenen Einzelbilder K(t-1) und K(t), die dem Differenzbild D(t) bzw. dem binarisierten Differenzbild B(t) zugrunde liegen, in Schritt S170 verifiziert werden.

Falls der Bereich erhöhter Bewegung mit dem vorgegebenen Bereich nicht übereinstimmt, kann in Schritt S180 die Authentizität der aufgenommenen Einzelbilder nicht verifiziert werden, und das Verfahren kann abgebrochen werden oder gemäß Schritt S190 (siehe Fig. 1) wiederholt werden.

Der Bereich, in dem die meisten intrinsischen Bewegungen einer Person zu erwarten sind, ist der Kopfbereich. Im Kopfbereich als solches sind die meisten intrinsischen Bewegungen in der Mundregion, der Backenregion, der Nasenregion oder der Augenregion zu erwarten. Vorzugsweise wird gemäß der zweiten Ausführungsform in Fig. 2 der wenigstens eine ermittelte Bereich erhöhter Bewegung deshalb mit der Mundregion, der Backenregion, der Nasenregion und/oder der Augenregion verglichen.

Wie implizit bereits angedeutet, ist es selbstverständlich auch möglich, mehrere Bereiche erhöhter Bewegung in dem Differenzbild zu ermitteln und zu überprüfen, ob diese ermittelten Bereiche erhöhter Bewegung mit der Mundregion, der Backenregion, der Nasenregion und/oder der Augenregion übereinstimmen.

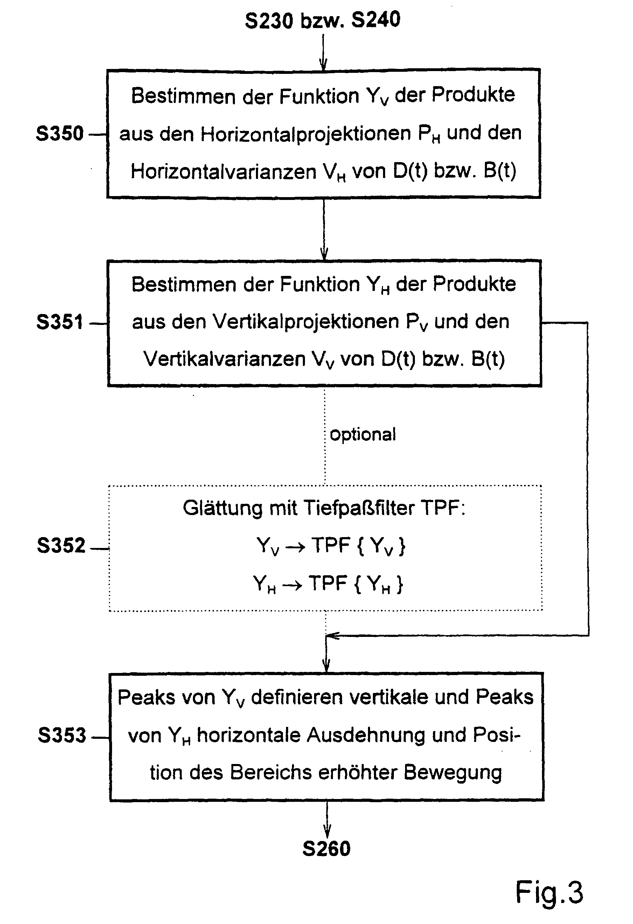

In Fig. 3 ist ein Ablaufdiagramm einer dritten Ausführungsform des erfindungsgemäßen Verfahrens dargestellt, das eine Alternative zu Schritt S250, also der Ermittlung des Bereichs erhöhter Bewegung, in der zweiten Ausführungsform angibt und im übrigen der zweiten Ausführungsform entspricht.

Demnach wird in der dritten Ausführungsform von einem Differenzbild D(t) oder alternativ von einem binarisierten Differenzbild B(t) ausgegangen. Das Differenzbild D(t) bzw. das binarisierte Differenzbild B(t) werden im folgenden abkürzend als Differenzbild K bezeichnet.

In Schritt S350 wird aus dem Differenzbild K die Funktion $Y_V$ der Produkte aus den Horizontalprojektionen $P_H$ und den Horizontalvarianzen $V_H$ bestimmt, in Formeln:

$$Y_V = P_H \cdot V_H = \left(\sum_c K_{cr}\right) \cdot \left(\frac{1}{nc}\sum_c \left(K_{cr} - \overline{K}_r\right)^2\right),$$

$$\text{mit} \quad \overline{K}_r = \frac{1}{nc}\sum_c K_{cr}, \tag{3}$$

$$\text{und} \quad nc = \text{Anzahl der Spalten von } K.$$

Weiterhin wird aus dem Differenzbild K in Schritt S351 die Funktion $Y_H$ der Produkte aus den Vertikalprojektionen $P_V$ und den Vertikalvarianzen $V_V$ nach folgender Formel bestimmt:

$$Y_H = P_V \cdot V_V = \left(\sum_r K_{cr}\right) \cdot \left(\frac{1}{nr}\sum_r \left(K_{cr} - \overline{K}_c\right)^2\right),$$

$$\text{mit} \quad \overline{K}_c = \frac{1}{nr}\sum_r K_{cr}, \tag{4}$$

$$\text{und} \quad nr = \text{Anzahl der Zeilen von } K$$

In Schritt S352 können die gemäß der oben stehenden Formeln erhaltenen Funktionen $Y_V$ und $Y_H$ mit einem geeigneten Tiefpaßfilter TPF{} geglättet werden.

In den Funktionen $Y_V$ und $Y_H$ bzw. den geglätteten Funktionen TPF{$Y_V$} und TPF{$Y_H$} werden in Schritt S353 Peaks identifiziert. Die Peaks von $Y_V$ bzw. $Y_H$ definieren hierbei die vertikale bzw. horizontale Ausdehnung und Position des Bereichs erhöhter Bewegung.

Als Zusammenhang zwischen dem Peak einer der Funktionen und dem entsprechenden Bereich erhöhter Bewegung lassen sich verschiedene im Stand der Technik bekannte Definitionen angeben. So kann beispielsweise durch den Maximalwert eines Peaks die Position und durch seine Halbwertsbreite die Ausdehnung des entsprechenden Bereichs angegeben werden. Alternativ kann die Ausdehnung auch durch die Wendepunkte des Peaks angegeben werden. Als weitere Alternative kann die Ausdehnung auch durch die Grenzen angegeben werden, die zu einer vorgegebenen Fläche unter dem Peak führen.

Zum Auffinden der einzelnen Peaks können die im Stand der Technik üblichen Verfahren verwendet werden. Diese Verfahren beruhen im wesentlichen darauf, die Abschnitte einer Funktion zu suchen, die einen vorbestimmten Schwellwert übersteigen.

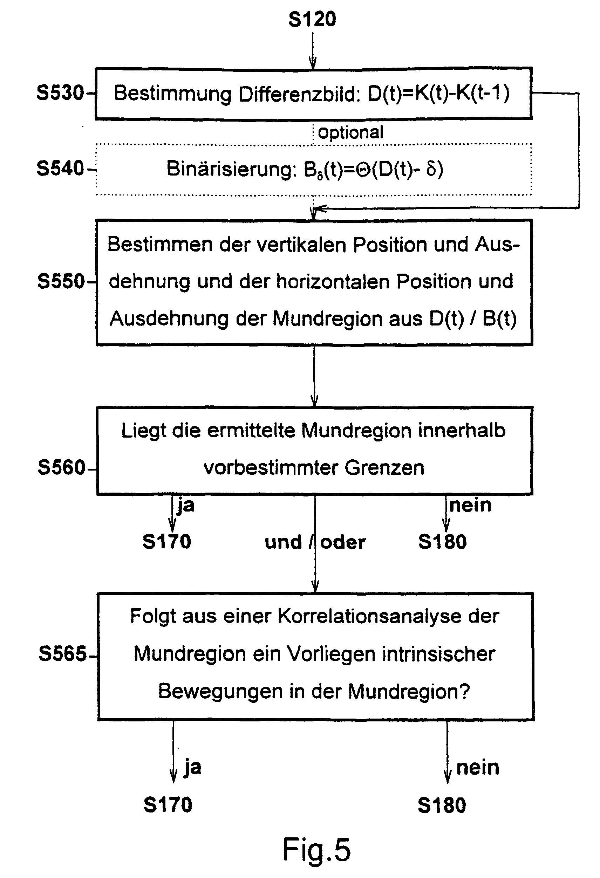

Die zu verwendende Definition für den Peak sowie das beste Verfahren zum Auffinden des Peaks hängt stark von der spezifischen intrinsischen Bewegung ab, die nachgewiesen werden soll; die für den jeweiligen Fall günstigste Definition für den Peak und das günstigste Verfahren zum Auffinden des Peaks lassen sich im Rahmen von Versuchen ermitteln. Es wird darauf hingewiesen, daß im Zusammenhang mit der in Fig. 5 beschriebenen Ausführungsform noch eine detaillierte Beschreibung einer spezifischen Definition für den Peak und des verwendeten Verfahrens zum Auffinden des Peaks folgt.

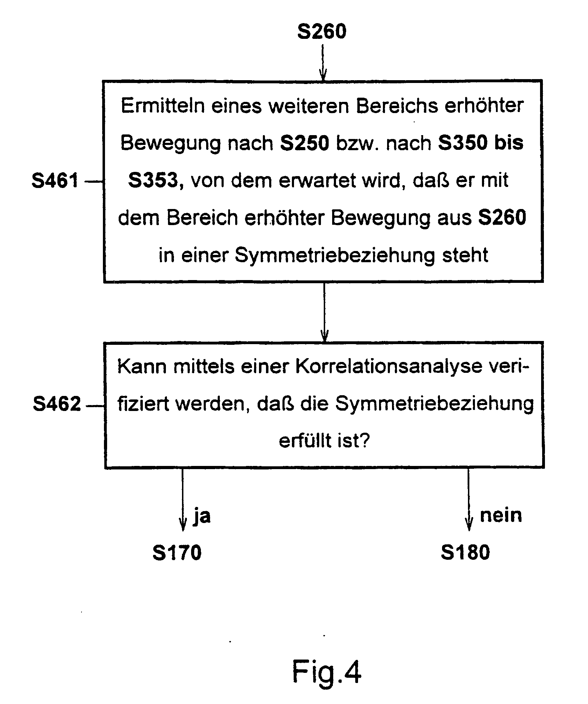

In Fig. 4 ist ein Ablaufdiagramm einer vierten Ausführungsform des erfindungsgemäßen Verfahrens dargestellt. Diese vierte Ausführungsform stellt eine Erweiterung der zweiten bzw. dritten Ausführungsform dar.

Zur Durchführung des Verfahrens gemäß der vierten Ausführungsform wird vorausgesetzt, daß bereits ein erster Bereich erhöhter Bewegung bestimmt und überprüft worden ist, ob dieser Bereich mit einem vorgegebenen Bereich, in dem intrinsische Bewegungen zu erwarten sind, übereinstimmt.

Falls ein derartiger Bereich gefunden worden ist, wird gemäß der vierten Ausführungsform in Schritt S461 ein weiterer Bereich erhöhter Bewegung, von dem erwartet wird, daß er mit dem ersten Bereich erhöhter Bewegung in einer Symmetriebeziehung steht, ermittelt.

Zur Ermittlung dieses zweiten Bereichs kann Schritt S250 (zweite Ausführungsform) bzw. können Schritte S350 bis S353 (dritte Ausführungsform) durchlaufen werden.

In diesem Zusammenhang bleibt anzumerken, daß eine Symmetriebeziehung zwischen zwei Bereichen in einem Differenzbild, d.h. eine Symmetriebeziehung in den Bewegungen, dann zu erwarten ist, wenn die zu den intrinsischen Bewegungen führenden Bereiche ebenfalls symmetrisch zueinander sind. Betrachtet man so beispielsweise den Kopfbereich einer zu erkennenden Person, eignen sich als erster und zweiter Bereich im Rahmen der vierten Ausführungsform beispielsweise die Mundregion in der linken und rechten Gesichtshälfte, die Backenregion in der linken und rechten Gesichtshälfte, die Nasenregion in der linken und rechten Gesichtshälfte sowie das linke und das rechte Auge.

Hat man zwei solche Bereiche, für die eine Symmetriebeziehung erwartet wird, in dem Differenzbild gefunden, kann mittels einer Korrelationsanalyse verifiziert werden, ob die Symmetriebeziehung erfüllt ist oder nicht.

Aufgrund der Tatsache, daß die intrinsischen Bewegungen, beispielsweise in der Kopfregion einer Person, symmetrisch sind, erhält man durch die vierte Ausführungsform somit eine Plausibilitätsüberprüfung der ermittelten Bereiche erhöhter Bewegung.

Falls also in Schritt S462 durch eine Korrelationsanalyse verifiziert wird, daß die Symmetriebeziehung erfüllt ist, kann in Schritt S170 die Authentizität der aufgenommenen Einzelbilder verifiziert werden.

Im anderen Fall kann die Authentizität nicht verifiziert werden (siehe Schritt S180), und demgemäß das Verfahren mit diesem Ergebnis abgebrochen werden, oder - wie bereits diskutiert - wiederholt durchgeführt werden.

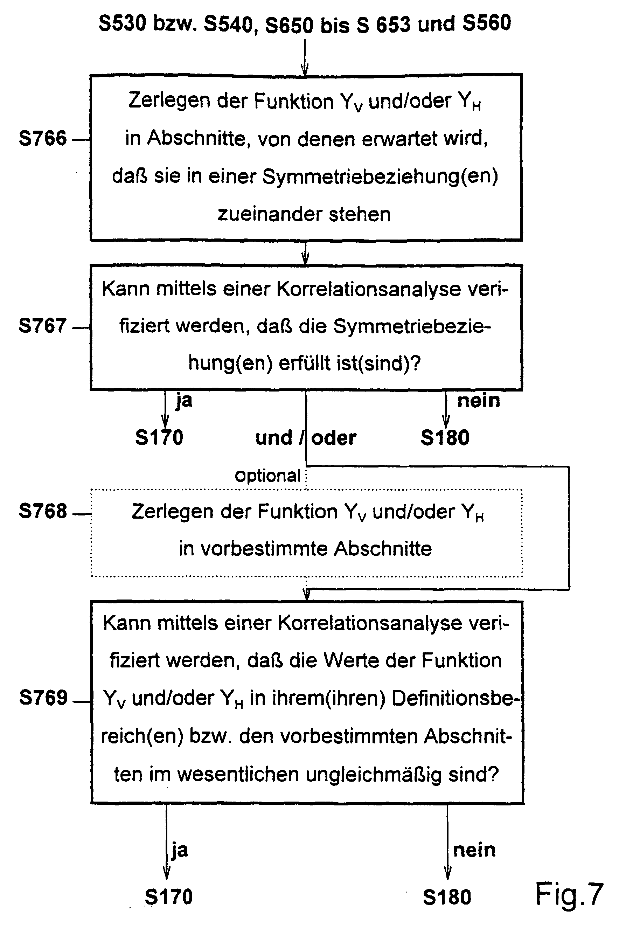

Die verschiedenen Möglichkeiten, eine Korrelationsanalyse gemäß Schritt S462 durchzuführen, werden untenstehend im Zusammenhang mit Fig. 7 noch im Detail erläutert.

In Fig. 5 ist das Ablaufdiagramm einer fünften Ausführungsform des erfindungsgemäßen Verfahrens dargestellt. Die in Fig. 5 dargestellten Schritte S530 bis S565 stellen eine bevorzugte Ausgestaltung des Schritts S130 gemäß der ersten Ausführungsform dar.

Somit wird auch in der fünften Ausführungsform zunächst eine Sequenz zeitlich aufeinanderfolgender Einzelbilder einer Person aufgenommen, und im Anschluß daran werden zwei zeitlich aufeinanderfolgende Einzelbilder aus dieser Sequenz ausgewählt. Dies ist in Fig. 5 durch Schritt S120 dargestellt.

Aus diesen Einzelbildern wird in Schritt S530 ein Differenzbild bestimmt, das optional in Schritt S540 binarisiert werden kann (die Schritte S530 und S540 entsprechen den Schritten S230 und S240 in der zweiten Ausführungsform, so daß an dieser Stelle auf eine Beschreibung verzichtet und auf die entsprechende Beschreibung der Schritte S230 und S240 verwiesen wird).

Aus dem Differenzbild wird gemäß der fünften Ausführungsform in Schritt S550 die vertikale Position und die Ausdehnung sowie die horizontale Position und die Ausdehnung der Mundregion einer zu erkennenden Person bestimmt.

Im Unterschied zu Schritt S250 in der zweiten Ausführungsform, in dem im Differenzbild Bereiche erhöhter Bewegungen ermittelt werden und überprüft wird, ob diese Bereiche bestimmten Regionen zugeordnet werden können, wird in Schritt S550 in dem Differenzbild nach einem bestimmten Bereich, in dem intrinsische Bewegungen erwartet werden, nämlich nach der Mundregion gesucht.

In Schritt S560 wird dann überprüft, ob die ermittelte Mundregion innerhalb vorbestimmter Grenzen liegt oder nicht. Falls die Mundregion innerhalb vorbestimmter Grenzen liegt, kann in Schritt S170 die Authentizität der aufgenommenen Einzelbilder verifiziert werden; falls die ermittelte Mundregion nicht innerhalb vorbestimmter Grenzen liegt, muß die Verifizierung der Authentizität der Einzelbilder verneint werden.

Darüber hinaus kann in Schritt S565 alternativ zu Schritt S560 eine Korrelationsanalyse mit der ermittelten Mundregion zur Bestimmung intrinsischer Bewegungen durchgeführt werden.

Verschiedene Möglichkeiten zur Durchführung einer Korrelationsanalyse werden im Zusammenhang mit Fig. 7 noch im Detail erläutert.

In einer Abwandlung der fünften Ausführungsform ist es außerdem möglich, die Schritte S560 und S565 nicht alternativ, sondern kumulativ durchzuführen. Demnach wird gemäß Schritt S170 die Authentizität der Einzelbilder nur festgestellt, wenn die ermittelte Mundregion innerhalb vorbestimmter Grenzen liegt und aus einer Korrelationsanalyse der Mundregion ein Vorliegen intrinsischer Bewegungen folgt.

Obwohl sich die fünfte Ausführungsform konkret auf die Mundregion bezieht, ist es selbstverständlich möglich, das Verfahren auch mit anderen Regionen, in denen intrinsische Bewegungen erwartet werden, oder mit Kombinationen derartiger Regionen durchzuführen.

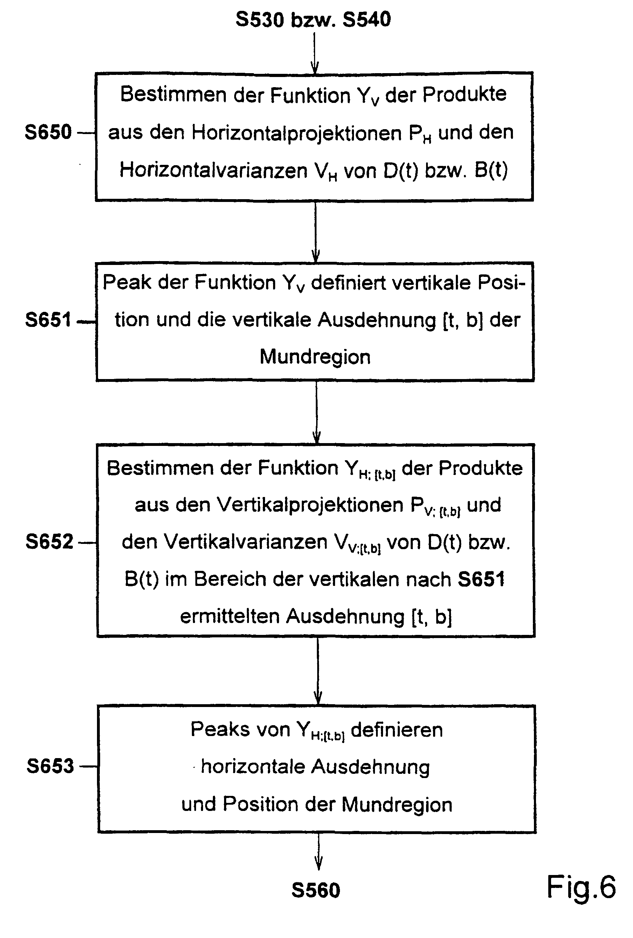

In Fig. 6 ist das Ablaufdiagramm einer sechsten Ausführungsform des erfindungsgemäßen Verfahrens dargestellt. Diese sechste Ausführungsform stellt eine bevorzugte Ausgestaltung des Schritts S550 in der fünften Ausführungsform zur Ermittlung der vertikalen Position und Ausdehnung und der horizontalen Position und Ausdehnung der Mundregion aus dem Differenzbild dar. Demnach wird, vorausgesetzt, daß gemäß Schritt 530 oder ein Differenzbild D(t) bzw. gemäß S540 ein binarisiertes Differenzbild B(t) vorliegt.

Aus diesem Differenzbild wird in Schritt 650 die Funktion $Y_V$ der Produkte aus den Horizontalprojektionen $P_H$ und den Horizontalvarianzen $V_H$ nach Gleichung (3) berechnet.

Die Funktion $Y_V$ kann optional durch einen Tiefpaßfilter geglättet werden.

Aus dieser Funktion bzw. der geglätteten Funktion werden in Schritt S651 die vertikale Position und die vertikale Ausdehnung der Mundregion bestimmt.

Die vertikale Mundposition ist hierbei als die Position des letzten (untersten) Maximums von $Y_V$, das größer als ein vorbestimmter Schwellwert ist, definiert. Im Fall der Mundregion hat sich der zweifache Mittelwert von $Y_V$ als geeigneter Schwellwert herausgestellt.

Als vertikale Ausdehnung des Mundbereichs kann die Breite des Peaks, bei der der Peak auf einen vorgegebenen Prozentsatz seines Maximalwerts abgefallen ist, angegeben werden. Hierbei haben sich 50% als günstiger Wert erwiesen.

Als Alternative hierzu kann die vertikale Ausdehnung des Mundbereichs auch als Breite des Peaks, der sich durch den Abstand der beiden nächstgelegenen Wendepunkte links und rechts von der Peakposition ergibt, angegeben werden.

Darüber hinaus können die erhaltenen Werte für die vertikale Position und die vertikale Ausdehnung auf ihre Plausibilität hin überprüft werden. Hierzu können eine minimale Mundposition und eine maximale Mundposition vorgegeben werden, und überprüft werden, ob die ermittelte Mundposition innerhalb dieser beiden Extremalwerte liegt. Dieselbe Prozedur kann alternativ oder kumulativ für die vertikale Ausdehnung des Mundbereichs durchgeführt werden.

Als nächstes wird in Schritt 652 die Funktion $Y_{H;t,b}$ der Produkte aus den Vertikalprojektionen $P_{V;t,b}$ und den Vertikalvarianzen $V_{V;t,b}$ in einem horizontalen Streifen, der sich von der in Schritt 651 ermittelten Mundobergrenze t zur Munduntergrenze b erstreckt, also

$$Y_{H;t,b} = P_{V;t,b} \cdot V_{H;t,b} = \left(\sum_{r=t}^{b} K_{cr}\right) \cdot \left(\frac{1}{n}\sum_{r=t}^{b}\left(K_{cr} - \overline{K}_c\right)^2\right),$$

$$\text{mit}\quad \overline{K}_c(t) = \frac{1}{n}\sum_{r=t}^{b} K_{cr}, \qquad n = b - t + 1, \tag{5}$$

$$\text{und}\quad nr = \text{Anzahl der Zeilen von K,}$$

berechnet.

Die so berechnete Funktion $Y_{H;tb}$ kann ebenfalls optional geglättet werden.

Im nächsten Schritt S653 wird die horizontale Position und Ausdehnung der Mundregion bestimmt.

Hierzu wird zunächst der Betrag der Ableitung der Funktion $Y_{H;tb}$ bzw. der geglätteten Funktion $TPF\{Y_{H;t,b}\}$, d.h.

$$b_{H;t,b} = |y_{H+1;t,b} - y_{H+1;t,b}|, \tag{6}$$

ermittelt.

Die linke horizontale Begrenzung der Mundregion wird dann als das erste Maximum von $b_H$, das größer als ein vorgegebener Schwellwert ist, definiert. Die rechte horizontale Grenze der Mundregion wird entsprechend als das letzte Maximum von $b_H$, das größer als dieser Schwellwert ist, definiert. Vorliegend wurde der Mittelwert von $b_H$ als Schwellwert verwendet.

Auch im Fall der horizontalen Ausdehnung des Mundes kann eine Plausibilitätsüberprüfung durchgeführt werden, derart, daß die ermittelte Mundregion innerhalb eines vorgegebenen maximalen Bereichs liegen muß, damit der Bereich erhöhter Bewegung als Mundbereich angesehen wird.

In Fig. 7 ist ein Ablaufdiagramm einer Korrelationsanalyse dargestellt, wie sie beispielsweise in Schritt S462 gemäß der vierten Ausführungsform oder in Schritt S565 gemäß der fünften Ausführungsform durchgeführt werden kann.

Die Prozedur gemäß dem Ablaufdiagramm in Fig. 7 wird zwar anhand der Funktionen $Y_V$ und $Y_H$ erläutert, kann jedoch ohne weiteres auf die Bereiche, wie sie in der vierten Ausführungsform ermittelt werden, angewendet werden.

In Schritt S766 wird zuerst die Funktion $Y_V$ und/oder $Y_H$ in Abschnitte zerlegt, von denen erwartet wird, daß sie in einer Symmetriebeziehung zueinander stehen.

In Schritt S767 wird mittels einer Korrelationsanalyse überprüft, ob die in Schritt S766 angenommene Symmetriebeziehung erfüllt ist.

Die Schritte S766 und S767 lassen sich selbstverständlich auch für mehrere Symmetriebeziehungen durchführen.

Falls mit der Korrelationsanalyse verifiziert werden kann, daß die Symmetriebeziehung erfüllt ist bzw. die Symmetriebeziehungen erfüllt sind, kann gemäß Schritt S170 die Authentizität der aufgenommenen Einzelbilder verifiziert werden.

Falls die Symmetriebeziehung mit der Korrelationsanalyse nicht verifiziert werden kann, dann läßt sich auch die Authentizität der Einzelbilder nicht verifizieren, und das Verfahren kann abgebrochen werden oder alternativ für ein neues Paar Einzelbilder wiederholt werden.

Für den bereits oben diskutierten Fall der Ermittlung intrinsischer Bewegungen in der Mundregion können im Schritt S767 die folgenden Korrelationen überprüft werden.

Zum einen ist eine intrinsische Mundbewegung in sich symmetrisch. Deshalb muß die Korrelation der Kurve $Y_H$ bzw. der geglätteten Kurve $TPF\{Y_H\}$ mit der gespiegelten Kurve $Y_H$ bzw. der gespiegelten geglätteten Kurve $TPF\{Y_H\}$ größer als ein vorbestimmter Wert sein.

Zweckmäßigerweise transformiert man vor der Korrelationsanalyse die Kurve $Y_H$ auf standardisierte Variablen, so daß die Funktion $Y_H$ den Mittelwert 0 und die Standardabweichung 1 besitzt. Bezeichnet man diese standardisierten Variablen als $n(Y_{H/V})$, berechnet sich die Korrelation nach der Formel

$$g_m = \sum_{c=-nc/2}^{nc/2-1} n_{m+c}(Y_H) \cdot n_{m-c}(Y_H), \tag{7}$$

wobei $n_c(Y_H)$ für Indizes $c < 0$ und $c \geq n_c$ mit 0 fortgesetzt wird.

Im Fall der Mundbewegung hat sich gezeigt, daß ein Wert von $g_m > 0{,}9$ einer hinreichend symmetrischen Mundbewegung entspricht. Demnach würde die erwartete Symmetriebeziehung bestätigt, wenn sich aus Gleichung (7) ein $g_m > 0{,}9$ ergibt.

Alternativ oder zusätzlich zu der oben beschriebenen Korrelationsanalyse kann auch die Korrelation des Bildausschnitts aus dem Differenzbild des gespiegelten Mundes mit dem Mund selbst überprüft werden. Wenn diese Korrelation kleiner als ein vorbestimmter Wert ist, dann kann davon ausgegangen werden, daß nicht eine tatsächliche intrinsische Bewegung stattgefunden hat, sondern die ermittelte Bewegung auf Bewegungen, Rauschen oder dergleichen zurückzuführen ist.

Die Korrelation des Differenzbilds des gespiegelten Munds mit dem Mund selbst läßt sich durch den Ausdruck

$$h_m = \sum_{c=-e/2}^{e/2} n_{cnt+c}\left(\sum_{r'=t}^{b} K_{cr'}\right) \cdot n_{cnt-c}\left(\sum_{r'=t}^{b} K_{cr'}\right), \tag{8}$$

wobei cnt die horizontale Position und e die Breite des Mundes sind und durch

$$cnt = \arg\max_m g_m \tag{9}$$

bestimmt werden kann, berechnen.

Es hat sich gezeigt, daß ein Wert von $h_M = 0.5$ geeignet ist, um intrinsische und nicht intrinsische Bewegungen zu diskriminieren.

Zusammen mit den oben beschriebenen Korrelationsanalysen oder alternativ ist in den Schritten S768 und S769 eine weitere Korrelationsanalyse vorgesehen.

Zur Durchführung dieser Korrelationsanalyse kann in Schritt S768 die Funktion $Y_V$ und/oder $Y_H$ in vorbestimmte Abschnitte zerlegt werden. Dieser Schritt ist allerdings nur für den Fall vorgesehen, daß bestimmte Bereiche der entsprechenden Funktion untersucht werden sollen. Falls die Funktion $Y_V$ und/oder $Y_H$ in ihrer Gesamtheit untersucht werden soll, kann der Schritt S768 demnach entfallen.

In Schritt S769 wird mittels einer Korrelationsanalyse überprüft, ob die Werte der entsprechenden Funktion in ihrem Definitionsbereich (bzw. den vorbestimmten Abschnitten, falls Schritt S768 durchgeführt wird) im wesentlichen ungleichmäßig ist.

Falls diese Werte ungleichmäßig sind, kann darauf geschlossen werden, daß es sich tatsächlich um eine intrinsische Bewegung handelt. Im Gegenteil hierzu kann bei gleichmäßigen Werten der Funktion geschlossen werden, daß es sich bei den ermittelten Bewegungen nicht um Bewegungen sondern vielmehr um ein Rauschen oder dergleichen handelt.

Zur Durchführung der Korrelationsanalyse gemäß Schritt S769 lassen sich im Fall des Mundbereichs Korrelationen zwischen den Vertikalprojektionen und Vertikalvarianzen für die rechte und linke Seite des Mundes überprüfen.

Die Korrelation zwischen der Vertikalprojektion und der Vertikalvarianz für die rechte und linke Seite des Mundes lassen sich berechnen durch die Ausdrücke

$$
i_m = \sum_{c=0}^{e/2} n_{cnt+c}\left(\sum_{r'=t}^{b} K_{cr'}\right) \cdot n_{cnt+c}\left(\sum_{r'=t}^{b} \left(K_{cr'} - \overline{K}_c\right)^2\right),
$$

$$
j_m = \sum_{c=-e/2}^{0} n_{cnt+c}\left(\sum_{r'=t}^{b} K_{cr'}\right) \cdot n_{cnt+c}\left(\sum_{r'=t}^{b} \left(K_{cr'} - \overline{K}_c\right)^2\right).
$$

$$(10)$$

Für den Fall des Mundbereichs hat sich gezeigt, daß die Korrelationen $i_m$ und $j_m$ zwischen der Vertikalprojektion und der Vertikalvarianz $\leq 0$ sein müssen, damit sichergestellt ist, daß es sich bei der detektierten Bewegung um eine intrinsische Bewegung handelt.

In den Verfahren gemäß der Figuren 5 bis 7 ist der Mundbereich als beispielhafte Ausführung des erfindungsgemäßen Verfahrens dargestellt. Das erfindungsgemäße Verfahren ist allerdings nicht, wie bereits im Zusammenhang mit der zweiten Ausführungsform erläutert, auf die Mundregion beschränkt.

Vielmehr sind beliebige Bereiche, in denen intrinsische Bewegungen zu erwarten sind, wie beispielsweise auch die Backenregion, die Nasenregion und die Augenregion bzw. beliebige Kombinationen dieser Regionen möglich.

Falls eine Region, die sich von der Mundregion unterscheidet, in bezug auf intrinsische Bewegungen untersucht werden soll, sind lediglich die Bereiche, in denen die Funktionen gebildet werden, die Korrelationen, die im Rahmen der Korrelationsanalyse untersucht werden, sowie die Schwellwerte, mit denen eine Korrelation verifiziert wird, den betrachteten Regionen entsprechend anzupassen.

Da die Prinzipien, nach denen eine derartige Anpassung erfolgen muß, anhand des oben dargelegten Beispiels der Mundregion und den Grundlagen, die sich in Standardlehrbüchern über Korrelationsanalyse finden, offensichtlich sind, wird auf eine detaillierte Beschreibung einer Anpassung an die anderen oben bezeichneten Regionen verzichtet.

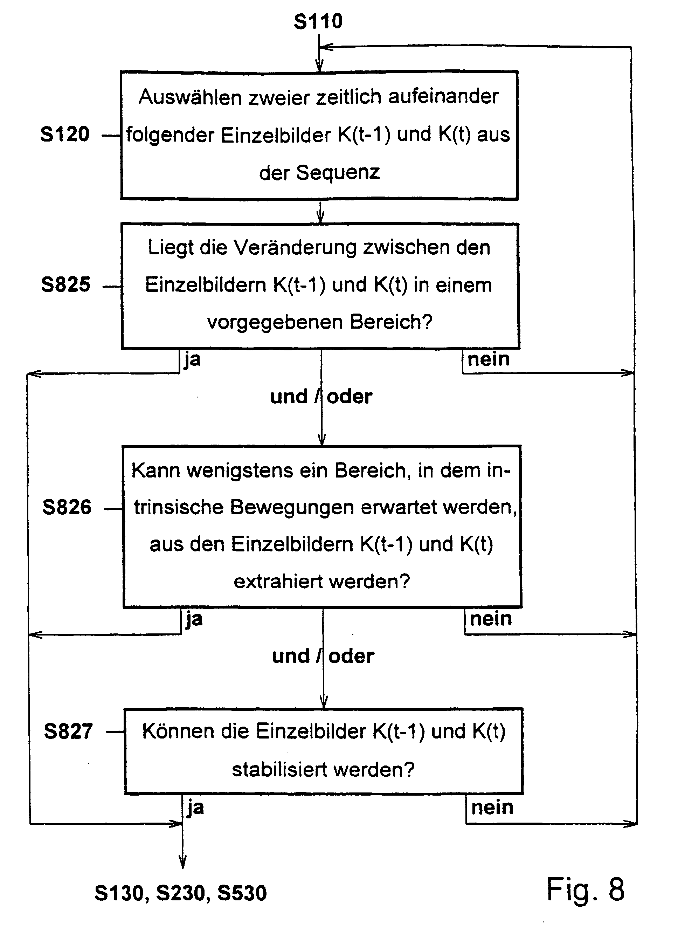

Fig. 8 zeigt das Ablaufdiagramm einer achten Ausführungsform des erfindungsgemäßen Verfahrens. Die Schritte der achten Ausführungsform dienen dazu, die Einzelbilder nach der Aufnahme für die Ermittlung der intrinsischen Bewegungen zu optimieren.

Demgemäß werden in Schritt S120, wie in Fig. 8 gezeigt, nachdem eine Sequenz zeitlich aufeinanderfolgender Einzelbilder in Schritt S110 aufgenommen worden ist, zwei zeitlich aufeinanderfolgende Einzelbilder ausgewählt.

In Schritt S825 wird zuerst überprüft, ob die Veränderung zwischen den beiden aufeinanderfolgenden Einzelbildern in einem vorgegebenen Bereich liegt oder nicht.

Aufgrund der Tatsache, daß die Veränderung zwischen zwei aufeinanderfolgenden Einzelbildern größer als ein vorbestimmter Wert sein muß, wird sichergestellt, daß aus beiden Einzelbildern eine über das normale Rauschen hinausgehende Veränderung und somit eine tatsächliche Bewegung oder eine intrinsische Bewegung der zu erkennenden Person stattgefunden hat.

Andererseits wird dadurch, daß die Veränderung zwischen zwei aufeinanderfolgenden Einzelbildern kleiner als ein vorbestimmter Wert sein muß, sichergestellt, daß Differenzbilder, in denen sich eine zu starke Bewegung widerspiegelt, wie sie beispielsweise durch ein Wackeln der Aufnahmeeinrichtung oder eine extrem schnelle Bewegung der zu erkennenden Person zustande kommen, nicht zur Ermittlung der intrinsischen Bewegung verwendet werden, da in diesem Fall das Trennen zwischen einer tatsächlichen Bewegung und einer intrinsischen Bewegung nicht mehr hinreichend sicher durchgeführt werden kann.

Schritt S825 kann dadurch ausgeführt werden, daß zur Bestimmung der Veränderung zwischen zwei aufeinanderfolgenden Einzelbildern eine Bewegungsstärke berechnet wird.

Für den Fall, daß die Differenzbilder Graustufenbilder sind, läßt sich die Bewegungsstärke im wesentlichen durch die Summe der Graupegel des Differenzbildes berechnen. Für den Fall, daß das Differenzbild binarisiert ist, berechnet sich die Bewegungsstärke zweckmäßigerweise durch die Summe der 1-Pixel oder 0-Pixel des binarisierten Differenzbildes.

In Schritt S826, der alternativ zu oder kummulativ mit Schritt S825 durchgeführt werden kann, werden die Bereiche in den Einzelbildern, in denen intrinsische Bewegungen erwartet werden, aus den entsprechenden Einzelbildern extrahiert bevor die Einzelbilder miteinander verglichen werden. Hierdurch kann die Menge an zu verarbeitenden Daten erheblich verringert werden.

Ein Bereich, der zweckmäßigerweise extrahiert werden kann, da in ihm eine Vielzahl intrinsischer Bewegungen stattfinden, ist der Kopfbereich.

Demnach kann zur Extraktion ein vorgegebener Ausschnitt in den Einzelbildern, in dem erfahrungsgemäß der Kopf der zu erkennenden Person zur Ruhe kommt, extrahiert werden.

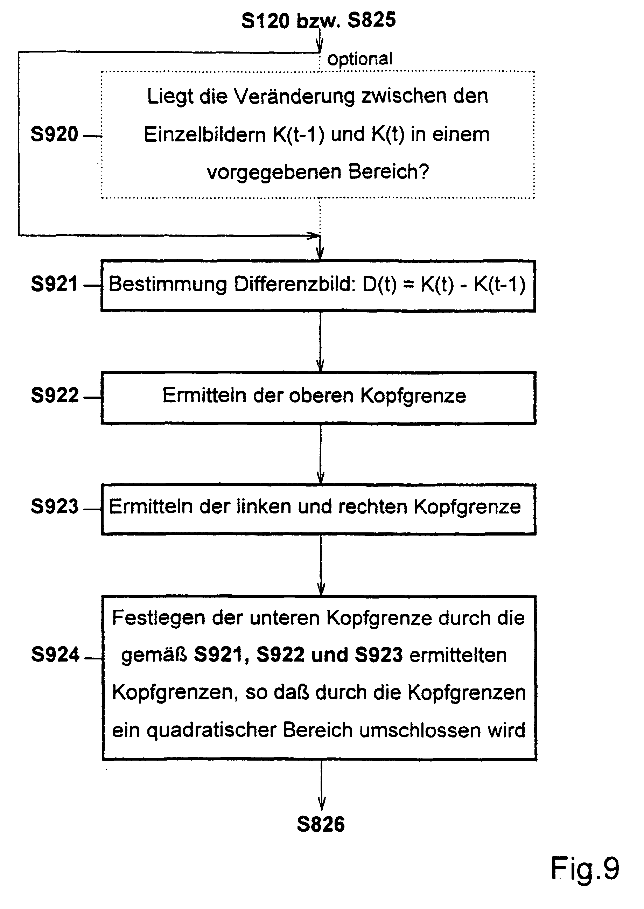

Unter Bezugnahme auf Fig. 9 wird untenstehend außerdem eine Alternative zu diesem Verfahren beschrieben. Gemäß dieser Alternative wird der Kopfbereich der zu erkennenden Person durch Ermitteln der Kopfgrenzen aus einem Differenzbild bestimmt. Mit diesen ermittelten Kopfgrenzen kann dann schließlich der Kopfbereich aus den jeweiligen Einzelbildern extrahiert werden.

Wiederum alternativ oder kummulativ zu den Schritten S826 bzw. S825 können in Schritt S827 die Einzelbilder stabilisiert werden.

Wiederum alternativ zu oder kummulativ mit den Schritten S826 und/oder S825 können in Schritt S827 zwei oder mehrere Einzelbilder in Bezug aufeinander stabilisiert werden, oder anders ausgedrückt, in bezug aufeinander ausgerichtet werden.

Hierzu kann durch Template-Matching eine residuale Verschiebung (l,m) zwischen K(t) und K(t-1) ermittelt werden. Dazu werden K(t) und K(t-1) zunächst zentriert übereinandergelegt (dies ist gleichbedeutend mit einer residualen Verschiebung (l,m) = (0,0)). Dann wird die normierte Korrelation c(0,0) ermittelt. Im nächsten Schritt werden die normierten Korrelationen c(l,m) in Abhängigkeit einer Variation der residualen Verschiebung in der Umgebung von (l,m) = (0,0) berechnet.

Die Korrelationskorrektur (x,y) ergibt sich schließlich aus

$$(x, y) = \arg\max_{(x,y)} c(x, y). \qquad (11)$$

Mit dieser residualen Korrektur kann schließlich ein stabilisiertes Differenzbild D(t) gemäß

$$D_{cr}(t) = K_{c-x,r-y}(t-1) - K_{cr}(t) \qquad (12)$$

ermittelt werden.

In Fig. 9 ist ein Ablaufdiagramm der bereits oben erwähnten Alternative zum Ermitteln der Kopfgrenzen, mit deren Hilfe der Kopfbereich, in dem die meisten intrinsischen Bewegungen erwartet werden, aus Einzelbildern K(t-1) und K(t) extrahiert werden kann.

Ausgehend von zwei ausgewählten zeitlich aufeinanderfolgenden Einzelbildern K(t-1) und K(t) wird in Schritt S921 zuerst das Differenzbild D(t) bestimmt.

In Schritt S922 wird dann aus dem Differenzbild D(t) die obere Kopfgrenze ermittelt. Hierzu wird zuerst die Horizontalprojektion $s_H(t)$ nach

$$s_H(t) = \sum_c D_{cr}(t) \qquad (13)$$

bestimmt. In diesem Zusammenhang wird daran erinnert, daß c die Spalten und r die Zeilen des Differenzbilds bezeichnen.

Optional kann die Funktion $s_H(t)$ durch Filterung mit einem geeigneten Tiefpaßfilter TPF geglättet werden.

Von der Funktion $s_H(t)$ bzw. der geglätteten Funktion $TPF\{s_H(t)\}$ wird dann der Betrag der ersten Ableitung gebildet

$$b_H(t) = | s_{r+1}(t) - s_{r-1}(t) | \qquad (14)$$

Als obere Kopfgrenze wird nun die Position des ersten Maximums von $b_H$ ermittelt, das größer als ein vorgegebener Schwellwert, hier der halbe Mittelwert von $b_H$, ist.

Falls ein derartiger Wert nicht gefunden wird, kann die Berechnung der oberen Kopfgrenze wiederholt werden oder auf einen vorgegebenen Wert, der beispielsweise für die Einzelbilder K(t-2) und K(t-1) bestimmt worden ist, gesetzt werden.

In Schritt S923 werden schließlich die linke und die rechte Kopfgrenze ermittelt. Hierzu kann das Differenzbild in q aufeinanderfolgende Streifen geteilt werden, die sich in vertikaler Richtung nach unten, ausgehend von der oberen Kopfgrenze t erstrecken.

In jedem Streifen wird dann die Vertikalprojektion des Differenzbildes nach

$$s_V^{(q)}(t) = \sum_{r=t+qz}^{t+(q+1)z-1} D_{cr}(t) \qquad (15)$$

berechnet.

Wie im Fall der Berechnung der oberen Kopfgrenze kann die Funktion $s_V^{(q)}(t)$ durch Filterung mit einem geeigneten Tiefpaßfilter TPF geglättet werden.

Im nächsten Schritt wird der Betrag der ersten Ableitung der Funktion $s_V^{(q)}(t)$ bzw. die geglättete Funktion TPF $\{ s_V^{(q)}(t)\}$ gebildet und anschließend über q summiert:

$$b_V(t) = \sum_q \left| s_{c+1}^{(q)}(t) - s_{c-1}^{(q)}(t) \right| \qquad (16)$$

Von dieser Funktion $b_V$ werden alle Maxima bestimmt, die größer als ein vorbestimmter Schwellwert, vorliegend der halbe Mittelwert $b_V$, sind.

Das erste Maximum (das am weitesten links gelegene Maximum) wird als Position der linken Kopfgrenze definiert. Das letzte Maximum (das am weitesten rechts gelegene Maximum) wird als rechte Kopfgrenze definiert.

Falls die Funktion $b_V$ weniger als zwei derartige Maxima aufweist, kann die Ermittlung für die linke und die rechte Kopfgrenze für das nächstfolgende Differenzbild bestimmt werden. Alternativ kann die linke und die rechte Kopfgrenze auch durch vorbestimmte Werte, die sich beispielsweise aus der Kopfgrenzenermittlung unter Zuhilfenahme des Differenzbilds D(t-1) ergeben haben, ersetzt werden.

In Schritt S924 wird schließlich unter Zuhilfenahme der oberen linken und rechten Kopfgrenze die untere Kopfgrenze ermittelt. Hierzu wird aus der Differenz der rechten Kopfgrenze und der linken Kopfgrenze die Breite des extrahierten Bereichs bestimmt. Die untere Kopfgrenze kann dann so eingestellt werden, daß sich insgesamt ein quadratischer Bereich ergibt.

Neben der in Fig. 9 beschriebenen Ausführung zur Ermittlung der Kopfgrenzen sind auch alternative Ausführungsformen möglich.

So ist es beispielsweise möglich, nach den oben beschriebenen Prozeduren lediglich die obere und die linke Kopfgrenze zu bestimmen. Die untere und die rechte Kopfgrenze können dann durch eine vorgegebene Breite und eine vorgegebene Höhe, die typischerweise dem Kopfbereich in den Einzelbildern entspricht, berechnet werden.

Darüber hinaus können die Kopfgrenzen auch aus einem Differenzbild, das als UND-Verknüpfung aus zwei aufeinanderfolgenden Differenzbildern erhalten worden ist, bestimmt werden.

Weiterhin kann in der in Fig. 9 dargestellten Ausführungsform optional geprüft werden, ob die Veränderung zwischen den Einzelbildern K(t-1) und K(t) in einem vorgegebenen Bereich liegt.

Da hierzu die gleichen Prozeduren wie im Zusammenhang mit Schritt S825 erläutert, verwendet werden können, erübrigt sich eine Beschreibung an dieser Stelle und es wird lediglich auf die Beschreibung im Zusammenhang mit Schritt S825 verwiesen.

**Patentansprüche**

**1.** Ein Verfahren zum Verifizieren der Authentizität eines im Rahmen einer Personenerkennung aufgenommenen Bildes einer der Personenerkennung zu unterziehenden Person, umfassend die Schritte:

Aufnehmen einer Sequenz von zeitlich aufeinanderfolgenden Einzelbildern der Person, und

Feststellen der Authentizität des aufgenommenen Bildes, wenn aus wenigstens zwei aufeinanderfolgenden Einzelbildern der Sequenz Bewegungen, die die zu erkennende Person ohne Veränderung ihres Schwerpunkts unbewusst ausführt, ermittelt werden, woraus folgt, dass die wenigstens zwei aufeinander folgenden Einzelbilder tatsächlich von einer lebenden Person stammen.

**2.** Das Verfahren nach Anspruch 1, in welchem zum Ermitteln der intrinsischen Bewegungen wenigstens ein Differenzbild jeweils zweier aufeinanderfolgender Einzelbilder der Sequenz ausgewertet wird.

**3.** Das Verfahren nach Anspruch 2, in welchem zum Ermitteln der intrinsischen Bewegungen ein Differenzbild ausgewertet wird, das aus einer UND-Verknüpfung zweier aufeinanderfolgender Differenzbilder resultiert.

**4.** Das Verfahren nach Anspruch 2 oder 3, in welchem jedes Differenzbild vor der Auswertung binarisiert wird.

**5.** Das Verfahren nach Anspruch 4, in welchem die Binarisierung mittels eines Schwellwerts, der durch Auswertung des Hintergrund ermittelt wird, durchgeführt wird.

**6.** Das Verfahren nach einem der Ansprüche 2 bis 5, in welchem in jedem Differenzbild wenigstens ein Ausschnitt erhöhter Bewegung ausgewählt wird, und
intrinsische Bewegungen festgestellt werden, wenn dieser wenigstens eine Ausschnitt in dem Differenzbild mit einem vorgegebenen Bereich, in dem intrinsische Bewegungen zu erwarten sind, konsistent ist.

**7.** Das Verfahren nach Anspruch 6, in welchem der Ausschnitt erhöhter Bewegung eine vertikale und eine horizontale Ausdehnung aufweist,
wobei die vertikale Ausdehnung im wesentlichen durch einen Peak der Funktion der Produkte aus den Horizontalprojektionen mit den Horizontalvarianzen des Differenzbildes bestimmt wird, und
die horizontale Ausdehnung im wesentlichen durch einen Peak der Funktion der Produkte aus den Vertikalprojektionen mit den Vertikalvarianzen des Differenzbildes bestimmt wird.

**8.** Das Verfahren nach Anspruch 7, in welchem jede Funktion vor Bestimmung des entsprechenden Peaks mit einem Tiefpaßfilter geglättet werden.

**9.** Das Verfahren nach einem der Ansprüche 6 bis 8, in welchem Ausschnitte aus dem Differenzbild ausgewählt werden, von denen erwartet wird, daß sie eine Symmetriebeziehung zueinander aufweisen, und
intrinsische Bewegungen festgestellt werden, wenn durch eine Korrelationsanalyse der entsprechenden Ausschnitte die Symmetriebeziehung verifiziert wird.

**10.** Das Verfahren nach einem der Ansprüche 6 bis 9, in welchem intrinsische Bewegungen festgestellt werden, wenn durch eine Korrelationsanalyse ermittelt wird, daß die erhöhte Bewegung in dem Bereich erhöhter Bewegung ungleichmäßig über diesen Bereich verteilt ist.

**11.** Das Verfahren nach einem der Ansprüche 2 bis 5, in welchem zum Feststellen intrinsischer Bewegungen
eine von der vertikalen Position abhängige Funktion, die für eine gegebene vertikale Position durch das Produkt aus der Horizontalprojektion mit der Horizontalvarianz des Differenzbildes bestimmt wird, und
eine von der horizontalen Position abhängige Funktion, die für eine gegebene horizontale Position durch das Produkt aus der Vertikalprojektionen mit der Vertikalvarianz des Differenzbildes bestimmt wird,
ausgewertet werden.

**12.** Das Verfahren nach Anspruch 11, in welchem jede Funktion vor Bestimmung des entsprechenden Peaks mit einem Tiefpaßfilter geglättet wird.

**13.** Das Verfahren nach Anspruch 11 oder 12, in welchem
wenigstens ein Peak in der von der vertikalen Position abhängigen Funktion ermittelt wird, und wenigstens ein Peak in der von der horizontalen Position abhängigen Funktion ermittelt wird, und
intrinsische Bewegungen festgestellt werden, wenn diese Peaks in vertikaler bzw. horizontaler Richtung innerhalb vorbestimmter Grenzen liegen, die durch die vertikale bzw. die horizontale Ausdehnung von wenigstens einem Bereich gegeben sind, in dem intrinsische Bewegungen zu erwarten sind.

**14.** Das Verfahren nach einem der Ansprüche 11 bis 13, in welchem
aus der von der vertikalen Position abhängigen Funktion und/oder aus der von der horizontalen Position abhängigen Funktion Abschnitte ausgewertet werden, von denen erwartet wird, daß sie in einer Symmetriebeziehung zueinander stehen, und

intrinsische Bewegungen festgestellt werden, wenn durch eine Korrelationsanalyse der entsprechenden Abschnitte die Symmetriebeziehung verifiziert wird.

15. Das Verfahren nach Anspruch 14, in welchem die Abschnitte, von denen erwartet wird, daß sie eine Symmetriebeziehung erfüllen, vor der Korrelationsanalyse in bezug aufeinander normiert werden.

16. Das Verfahren nach einem der Ansprüche 11 bis 15, in welchem
die von der vertikalen Position abhängige Funktion und/oder die von der horizontalen Position abhängige Funktion ausgewertet werden, und
intrinsische Bewegungen festgestellt werden, wenn durch eine Korrelationsanalyse ermittelt wird, daß die Werte der von der vertikalen Position abhängigen Funktion und/oder der von der horizontalen Position abhängigen Funktion über einen vorbestimmten Bereich einen ungleichmäßigen Verlauf zeigen.

17. Das Verfahren nach einem der vorangegangenen Ansprüche, in welchem die zu ermittelnden intrinsischen Bewegungen intrinsische Bewegungen im Kopfbereich der zu erkennenden Person sind.

18. Das Verfahren nach Anspruch 17, in welchem die zu ermittelnden intrinsischen Bewegungen intrinsische Bewegungen in der Mundregion und/oder der Backenregion und/oder der Nasenregion und/oder der Augenregion der zu erkennenden Person sind.

19. Das Verfahren nach Anspruch 17 oder 18, in welchem die zu ermittelnden intrinsischen Bewegungen intrinsische Bewegungen in wenigstens zwei zueinander symmetrischen Regionen im Kopfbereichs der zu erkennenden Person sind, und diese wenigstens zwei zueinander symmetrische Bereiche zur Bestimmung der Symmetrieachse des Kopfbereichs verwendet werden.

20. Das Verfahren nach Anspruch 19, in welchem mittels der gefundenen Symmetrieachse ein zur Personenerkennung verwendbares Bild erzeugt wird, in dem ein frontoparallel gedrehter Kopfbereich in einen Kopfbereich mit gedrehter Symmetrieachse transformiert ist.

21. Das Verfahren nach Anspruch 19 oder 20, in welchem mittels der gefundenen Symmetrieachse ein zur Personenerkennung verwendbares Bild der zu erkennenden Person erzeugt wird, das aus dem linken Kopfbereich und dem gespiegelten linken Kopfbereich zusammengesetzt ist, bzw. das aus dem rechten Kopfbereich und dem gespiegelten rechten Kopfbereich zusammengesetzt ist.

22. Das Verfahren nach einem der vorangegangenen Ansprüchen, in welchem vor dem Feststellen der Authentizität die Bereiche in den Einzelbildern, in denen intrinsische Bewegungen erwartet werden, aus den Einzelbildern extrahiert werden.

23. Das Verfahren nach Anspruch 22, in welchem zum Extrahieren der Bereiche wenigstens ein Differenzbild jeweils zweier aufeinanderfolgender Einzelbilder der Sequenz ausgewertet wird.

24. Das Verfahren nach Anspruch 23, in welchem zum Extrahieren der Bereiche ein Differenzbild ausgewertet wird, das aus einer UND-Verknüpfung zweier aufeinanderfolgender Differenzbilder resultiert.

25. Das Verfahren nach Anspruch 23 oder 24, in welchem jedes Differenzbild vor der Auswertung binarisiert wird.

26. Das Verfahren nach Anspruch 25, in welchem die Binarisierung mittels eines Schwellwerts, der durch Auswertung des Hintergrund ermittelt wird, durchgeführt wird.

27. Das Verfahren nach einem der Ansprüche 22 bis 26, in welchem der Kopfbereich der zu erkennenden Person extrahiert wird.

28. Das Verfahren nach Anspruch 27, in welchem der extrahierte Kopfbereich zur Personenerkennung auf eine vorbestimmte Standardgröße transformiert wird.

29. Das Verfahren nach Anspruch 27 oder 28, in welchem das Extrahieren des Kopfbereichs das Bestimmen von wenigstens zwei Kopfgrenzen in den entsprechenden Einzelbildern bzw. Differenzbildern, anhand derer der Kopfbereich aus den entsprechenden Einzelbildern bzw. den Differenzbildern extrahiert wird, umfaßt.

30. Das Verfahren nach Anspruch 29, in welchem das Ermitteln der Kopfgrenze in den entsprechenden Einzelbildern bzw. Differenzbildern das Ermitteln der oberen und der linken Kopfgrenze umfaßt.

31. Das Verfahren nach Anspruch 29, in welchem das Ermitteln der Kopfgrenze in den entsprechenden Einzelbildern bzw. Differenzbildern das Ermitteln der oberen, der linken und der rechten Kopfgrenze umfaßt.

32. Das Verfahren nach einem der Ansprüche 29 bis 31, in welchem jede Kopfgrenze durch eine Kopfbegrenzungslinie definiert wird, die so verläuft, daß der Umriß des Kopfes im wesentlichen vollständig innerhalb der Kopfbegrenzungslinien liegt.

33. Das Verfahren nach einem der Ansprüche 30 bis 32, in welchem zur Bestimmung der oberen Kopfgrenze
die Funktion der Vertikalprojektionen des binarisierten Differenzbildes ermittelt wird, und
die obere Kopfgrenze durch das erste Maximum des Betrag der ersten Ableitung dieser Funktion, das über einem vorgegebenen Schwellwert liegt, definiert wird.

34. Das Verfahren nach Anspruch 33, in welchem die Funktion der Vertikalprojektionen vor dem Definieren der Kopfgrenze mit einem Tiefpaßfilter geglättet wird.

35. Das Verfahren nach einem der Ansprüche 30 bis 34, in welchem zur Bestimmung der linken Kopfgrenze
die Funktion der Horizontalprojektionen des binarisierten Differenzbildes ermittelt wird, und
die linke Kopfgrenze durch das erste Maximum des Betrag der ersten Ableitung dieser Funktion, das über einem vorgegebenen Schwellwert liegt, definiert wird.

36. Das Verfahren nach einem der Ansprüche 30 bis 34, in welchem zur Bestimmung der linken Kopfgrenze
das Differenzbild in eine Mehrzahl in vertikaler Richtung aufeinanderfolgende Streifen geteilt wird, wobei sich der erste Streifen in vertikaler Richtung nach unten an die ermittelte obere Kopfgrenze anschließt,
in jedem Streifen die Funktion der Horizontalprojektionen des binarisierten Differenzbildes ermittelt wird,
die Beträge der ersten Ableitungen der auf diese Weise erhaltenen Mehrzahl an Funktionen der Horizontalprojektionen gebildet werden,
die Summe der auf diese Weise gebildeten Mehrzahl an Beträgen addiert werden, und
die linke Kopfgrenze als das erste Maximum dieser Summe, das über einem vorgegebenen Schwellwert liegt, definiert wird.

37. Das Verfahren nach Anspruch 35 oder 36, in welchem die Funktion bzw. die Funktionen der Horizontalprojektionen vor dem Definieren der Kopfgrenze mit einem Tiefpaßfilter geglättet wird bzw. werden.

38. Das Verfahren nach einem der Ansprüche 30 bis 37, in welchem zur Bestimmung der rechten Kopfgrenze
die Funktion der Horizontalprojektionen des binarisierten Differenzbildes ermittelt wird, und
die rechte Kopfgrenze durch das letzte Maximum des Betrag der ersten Ableitung dieser Funktion, das über einem vorgegebenen Schwellwert liegt, definiert wird.

39. Das Verfahren nach einem der Ansprüche 30 bis 37, in welchem zur Bestimmung der rechten Kopfgrenze
das Differenzbild in eine Mehrzahl in vertikaler Richtung aufeinanderfolgende Streifen geteilt wird, wobei sich der erste Streifen in vertikaler Richtung nach unten an die ermittelte obere Kopfgrenze anschließt,
in jedem Streifen die Funktion der Horizontalprojektionen des binarisierten Differenzbildes ermittelt wird,
die Beträge der ersten Ableitungen der auf diese Weise erhaltenen Mehrzahl an Funktionen der Horizontalprojektionen gebildet werden,
die Summe der auf diese Weise gebildeten Mehrzahl an Beträgen addiert werden, und die rechte Kopfgrenze als das letzte Maximum dieser Summe, das über einem vorgegebenen Schwellwert liegt, definiert wird.

40. Das Verfahren nach Anspruch 38 oder 39, in welchem die Funktion bzw. die Funktionen der Horizontalprojektionen vor dem Definieren der Kopfgrenze mit einem Tiefpaßfilter geglättet wird bzw. werden.

41. Das Verfahren nach einem der Ansprüche 29 bis 40, in welchem zwei aufeinanderfolgende Einzelbilder bzw. hieraus gewonnene Differenzbilder zum Ermitteln der Kopfgrenzen nur verwendet werden, wenn eine Veränderung zwischen den zwei aufeinanderfolgenden Einzelbildern in einem vorbestimmten Bereich liegt.

42. Das Verfahren nach Anspruch 41, in welchem zur Bestimmung der Veränderung zwischen zwei aufeinander folgenden Einzelbildern eine Bewegungsstärke berechnet wird.

43. Das Verfahren nach Anspruch 42, in welchem die Bewegungsstärke im wesentlichen durch die Summe der Graupegel des Differenzbildes berechnet wird.

44. Das Verfahren nach Anspruch 42, in welchem die Bewegungsstärke im wesentlichen durch die Summe der 1-Pixel oder 0-Pixel des binarisierten Differenzbildes berechnet wird.

45. Das Verfahren nach einem der Ansprüche 29 bis 44, in welchem vorbestimmte Kopfgrenzen zum Extrahieren des Kopfbereichs verwendet werden, wenn keine Kopfgrenzen ermittelt werden können.

46. Das Verfahren nach einem der Ansprüche 29 bis 44, in welchem vorbestimmte Kopfgrenzen zum Extrahieren des Kopfbereichs verwendet werden, wenn eine der ermittelten Kopfgrenzen nicht innerhalb vorbestimmter Grenzen liegen.

47. Das Verfahren nach einem der Ansprüche 30 bis 46, in welchem die untere bzw. die rechte und untere Kopfgrenze so festgelegt werden, daß ein quadratischer Kopfbereich aus den entsprechenden Einzelbildern bzw. Differenzbildern extrahiert wird.

48. Das Verfahren nach einem der vorangegangenen Ansprüche, in welchem aus zwei aufeinanderfolgenden Einzelbildern ein stabilisiertes Differenzbild gebildet wird, welches zum Ermitteln der intrinsischen Bewegungen und/oder zum Extrahieren der Bereiche, in denen intrinsische Bewegungen ermittelt werden sollen, ausgewertet wird.

49. Das Verfahren nach Anspruch 48, in welchem die Stabilisierung mittels einer Korrelationskorrektur durchgeführt wird.

50. Das Verfahren nach Anspruch 49, in welchem die Korrelationskorrektur ein Template-Matching umfaßt.

51. Das Verfahren nach Anspruch 50, in welchem das Template-Matching ein Berechnen des Differenzbildes umfaßt, wobei beim Berechnen des Differenzbildes das erste zur Bildung des Differenzbildes verwendete Einzelbild gegenüber dem zweiten zur Bildung des Differenzbildes verwendeten Einzelbild so verschoben ist, daß eine Korrelationsfunktion zwischen beiden Einzelbildern maximal ist.

52. Das Verfahren nach einem der vorangegangenen Ansprüche, in welchem zwei aufeinanderfolgende Einzelbilder bzw. hieraus gewonnene Differenzbilder zum Ermitteln der intrinsischen Bewegungen nur verwendet werden, wenn eine Veränderung zwischen den zwei aufeinanderfolgenden Einzelbildern in einem vorbestimmten Bereich liegt.

53. Das Verfahren nach Anspruch 52, in welchem zur Bestimmung der Veränderung zwischen zwei aufeinander folgenden Einzelbildern eine Bewegungsstärke berechnet wird.

54. Das Verfahren nach Anspruch 53, in welchem die Bewegungsstärke im wesentlichen durch die Summe der Graupegel des Differenzbildes berechnet wird.

55. Das Verfahren nach Anspruch 53, in welchem die Bewegungsstärke im wesentlichen durch die Summe der 1-Pixel oder 0-Pixel des binarisierten Differenzbildes berechnet wird.

**Claims**

1. A method for verifying the authenticity of an image recorded in a person identifying process and belonging to a person to be identified, the method comprising the steps of:

   recording a sequence of consecutive individual images of the person, and

   determining the authenticity of the recorded image if in at least two consecutive individual images of the sequence movements are detected, that the person to be identified carries out unconsciously without changes in his or her center of gravity, from which it follows that the at least two consecutive individual images originate from a living person.

**2.** The method according to claim 1, wherein determination of the intrinsic movements comprises evaluating at least one differential image of two consecutive individual images of the sequence.

**3.** The method according to claim 2, wherein for the determination of the intrinsic movements a differential image is evaluated that results from an AND operation of two consecutive differential images.

**4.** The method according to claim 2, wherein each differential image is binarized prior to evaluation.

**5.** The method according to claim 4, wherein binarization is carried out by means of a threshold value which is determined by evaluating the background.

**6.** The method according to claim 2, wherein in each differential image at least one section of enhanced movement is selected and intrinsic movements are detected if said at least one section in the differential image is consistent with a predetermined region in which intrinsic movements are to be expected.

**7.** The method according to claim 6, wherein the section of enhanced movement has a vertical and a horizontal extent. wherein the vertical extent is substantially determined by a peak of the function of the products from the horizontal projections with the horizontal variances of the differential image, and
the horizontal extent is substantially determined by a peak of the function of the products from the vertical projections with the vertical variances of the differential image.

**8.** The method according to claim 7, wherein each function is smoothed with a low-pass filter prior to the determination of the corresponding peak.

**9.** The method according to claim 6, wherein sections are chosen from the differential image that are expected to have a symmetrical relationship with one another, and
intrinsic movements are detected when the symmetrical relationship is verified by a correlation analysis of the corresponding sections.

**10.** The method according to claim 6, wherein intrinsic movements are detected if it is determined by way of a correlation analysis that the enhanced movement in the region of enhanced movement is irregularly distributed over said region.

**11.** The method according to claim 2, wherein detection of intrinsic movements further comprises evaluating:

a function which depends on the vertical position and which is determined for a given vertical position through the product from the horizontal projection with the horizontal variance of the differential image, and a function which depends on the horizontal position and which is determined for a given horizontal position through the product from the vertical projection with the vertical variance of the differential image.

**12.** The method according to claim 11, wherein each function is smoothed with a low-pass filter.

**13.** The method according to claim 11, wherein
at least one peak is determined in the function depending on the vertical position, and
at least one peak is determined in the function depending on the horizontal position, and intrinsic movements are detected if said peaks in the vertical and horizontal direction are within predetermined limits that are given by the vertical and horizontal extent of at least one region in which intrinsic movements are to be expected.

**14.** The method according to claim 11 further comprising evaluating,
on the basis of the function depending on at least one of the vertical position and the function depending on the horizontal position, sections that are expected to be in a symmetrical relationship, and
detecting intrinsic movements if the symmetrical relationship is verified by a correlation analysis of the corresponding sections.

15. The method according to claim 14, wherein the sections which are expected to be in a symmetrical relationship are standardized with respect to each other prior to the correlation analysis.

16. The method according to claim 11 further comprising evaluating at least one of the function depending on the vertical position and the function depending on the horizontal position, and detecting intrinsic movements if it is determined by way of a correlation analysis that the values of at least one of the function depending on the vertical position and of the function depending on the horizontal position are irregular over a predetermined region.

17. The method according to claim 1, wherein the intrinsic movements to be determined are intrinsic movements in the head region of the person to be identified.

18. The method according to claim 17, wherein the intrinsic movements to be determined are intrinsic movements in at least one of the group consisting of the mouth region, the cheek region, the nose region, and the eye region of the person to be identified.

19. The method according to claim 17, wherein the intrinsic movements to be determined are intrinsic movements in at least two regions that are in symmetrical relationship with each other in the head region of the person to be identified, and said at least two symmetrical regions are used for determining the axis of symmetry of the head region.

20. The method according to claim 19, further comprising producing with the help of the axis of symmetry found, an image which can be used for identifying a person and in which a frontoparallel-rotated head region is transformed into a head region with a rotated axis of symmetry.

21. The method according to claim 19, further comprising producing an image of the person to be identified with the help of the axis of symmetry found, said image being useable for identifying the person and being composed of the left head region and the mirrored left head region or of the right head region and the mirrored right head region.

22. The method according to claim 1, further comprising prior to the detection of the authenticity extracting regions from the individual images in which intrinsic movements are expected.

23. The method according to claim 22, wherein extracting the regions comprises evaluating at least one differential image of two consecutive individual images of the sequence.

24. The method according to claim 23, wherein extracting the regions comprises evaluating a differential image that results from an AND operation of two consecutive differential images.

25. The method according to claim 23, wherein each differential image is binarized prior to evaluation.

26. The method according to claim 25, wherein binarization is carried out by means of a threshold value which is determined by evaluating the background.

27. The method according to claim 22, wherein the head region of the person to be identified is extracted.

28. The method according to claim 27, wherein the extracted head region for identifying the person is transformed to a predetermined standard size.

29. The method according to claim 27, wherein extracting the head region comprises determining at least two head boundaries in the corresponding individual images, on the basis of which the head region is extracted from the corresponding individual images.

30. The method according to claim 29, wherein determining the head region in the corresponding individual images comprises determining the upper and the left head boundary.

31. The method according to claim 29, wherein determining the head boundary in the corresponding individual images comprises determining the upper, the left and the right head boundary.

**32.** The method according to claim 29, wherein each head boundary is defined by a head boundary line which extends such that the contour of the head is positioned substantially entirely within the head boundary lines.

**33.** The method according to claim 30, wherein for the determination of the upper head boundary comprises:

determining a function of the vertical projections of a binarized differential image, and

defining the upper head boundary by the first maximum of the absolute value of the first derivative of said function that is above a predetermined threshold value.

**34.** The method according to claim 33, wherein the function of the vertical projections is smoothed with a low-pass filter prior to defining the head boundary.

**35.** The method according to claim 30, wherein determination of the left head boundary comprises:

determining a function of the horizontal projections of a binarized differential image, and

defining the left head boundary by the first maximum of the absolute value of the first derivative of said function that is above a predetermined threshold value.

**36.** The method according to claim 30, wherein determination of the left head boundary comprises:

dividing a binarized differential image into a plurality of vertically successive strips, the first strip being vertically downwardly adjacent to the upper head boundary determined,

determining in each strip the function of the horizontal projections of the binarized differential image,

forming the absolute values of the first derivatives of the resulting plurality of functions of the horizontal projections,

adding the sum of the resulting plurality of absolute values, and

defining the left head boundary as the first maximum of said sum that is above a predetermined threshold value.

**37.** The method according to claim 35, wherein the function or functions of the horizontal projections is/are smoothed with a low-pass filter prior to defining the head boundary.

**38.** The method according to claim 30, wherein determination of the right head boundary comprises:

determining a function of the horizontal projections of a binarized differential image, and

defining the right head boundary by the last maximum of the absolute amount of the first derivative of said function that is above a predetermined threshold value.

**39.** The method according to claim 30, wherein determination of the right head boundary comprises:

dividing a binarized the differential image into a plurality of vertically successive strips, the first strip being vertically downwardly adjacent to the upper head boundary determined,

determing in each strip the function of the horizontal projections of the binarized differential images,

forming the absolute values of the first derivatives of the resulting plurality of functions of the horizontal projections,

adding the sum of the resulting plurality of absolute values, and

defining the right head boundary as the last maximum of said sum that is above a predetermined threshold value.

40. The method according to claim 38, wherein the function or functions of the horizontal projections is/are smoothed with a low-pass filter prior to defining the head boundary.

41. The method according to claim 29, wherein two consecutive individual images are only used for determining the head boundaries if a change between the two consecutive individual images is within a predetermined range.

42. The method according to claim 41, wherein determination of the change between two consecutive individual images includes calculating a motional intensity.

43. The method according to claim 42, wherein the motional intensity is substantially calculated through the sum of the gray level of a differential image obtained from the two consecutive individual images.

44. The method according to claim 42, wherein the motional intensity is substantially calculated through the sum of the 1 pixel or 0 pixel of the binarized differential image.

45. The method according to any one of claims 29 to 44, wherein predetermined head boundaries are used for extracting the head region if no head boundaries can be determined.

46. The method according to claim 29, wherein predetermined head boundaries are used for extracting the head region if one of the head boundaries determined is not within predetermined limits.

47. The method according to claim 30, wherein one of the lower and the right and lower head boundary is defined such that a square head region is extracted from at lest one of the corresponding individual images and differential images.

48. The method according to claim 1, wherein a stabilized differential image is formed from two consecutive individual images, said image being evaluated for one of detecting the intrinsic movements and extracting the regions in which intrinsic movements are to be detected.

49. The method according to claim 48, wherein stabilization is carried out by means of a correlation correction.

50. The method according to claim 49, wherein the correlation correction comprises template matching.

51. The method according to claim 50, wherein template matching comprises calculating a differential image, the first individual image used for forming the differential image being shifted in the calculation of the differential image with respect to the second individual image used for forming the differential image in such a manner that a correlation function between the two individual images is maximum.

52. The method according to claim 12, wherein two consecutive individual images are only used for determining the intrinsic movements if a change between the two consecutive individual images is within a predetermined range.

53. The method according to claim 52, wherein a motional intensity is calculated for determining the change between two consecutive individual images.

54. The method according to claim 53, wherein the motional intensity is substantially calculated through the sum of the gray level of the differential image.

55. The method according to claim 53, wherein the motional intensity is substantially calculated through the sum of the 1 pixel or 0 pixel of the binarized differential image.

**Revendications**

1. Procédé de vérification de l'authenticité d'une image d'une personne à soumettre à une identification de personnes enregistrée dans le cadre d'une identification de personnes, comprenant les étapes suivantes :

   enregistrement d'une séquence d'images individuelles successives dans le temps de la personne, et

constatation de l'authenticité de l'image enregistrée si l'on détermine, à partir d'au moins deux images individuelles successives de la séquence, des mouvements que la personne à identifier a effectués inconsciemment sans changement de son centre de gravité, d'où il s'ensuit que les au moins deux images individuelles successives proviennent effectivement d'une personne vivante.

2. Procédé selon la revendication 1, dans lequel au moins une image différentielle de deux images successives individuelles de la séquence est utilisée pour déterminer des mouvements intrinsèques.

3. Procédé selon la revendication 2, dans lequel une image différentielle qui résulte d'une multiplication logique de deux images différentielles successives est utilisée pour déterminer des mouvements intrinsèques.

4. Procédé selon la revendication 2 ou 3, dans lequel chaque image différentielle est binarisée avant son utilisation.

5. Procédé selon la revendication 4, dans lequel la binarisation est effectuée au moyen d'une valeur seuil qui est déterminée en utilisant l'arrière-plan.

6. Procédé selon l'une des revendications 2 à 5, dans lequel on sélectionne dans chaque image différentielle au moins un extrait d'un mouvement agrandi et
des mouvements intrinsèques sont constatés si cet au moins un extrait de l'image différentielle concorde avec une zone prescrite dans laquelle des mouvements intrinsèques sont attendus.

7. Procédé selon la revendication 6, dans lequel l'extrait de mouvement agrandi présente un allongement vertical et horizontal,
l'allongement vertical étant déterminé essentiellement par un pic de la fonction des produits des projections horizontales par les variances horizontales de l'image différentielle et
l'allongement horizontal étant déterminé essentiellement par un pic de la fonction des produits des projections verticales par les variances verticales de l'image différentielle.

8. Procédé selon la revendication 7, dans lequel chaque fonction est lissée avec un filtre passe-bas avant la détermination du pic concerné.

9. Procédé selon l'une des revendications 6 à 8, dans lequel on sélectionne des extraits de l'image différentielle dont on attend qu'ils présentent une relation de symétrie les uns par rapport aux autres et
des mouvements intrinsèques sont constatés si la relation de symétrie peut être vérifiée par une analyse corrélative des extraits concernés.

10. Procédé selon l'une des revendications 6 à 9, dans lequel des mouvements intrinsèques sont constatés s'il ressort de l'analyse corrélative que le mouvement agrandi dans la zone du mouvement agrandi est réparti irrégulièrement sur cette zone.

11. Procédé selon l'une des revendications 2 à 5, dans lequel on utilise pour la constatation des mouvements intrinsèques
une fonction dépendant de la position verticale, qui est déterminée pour une position verticale donnée par le produit de la projection horizontale par la variance horizontale de l'image différentielle et
une fonction dépendant de la position horizontale, qui est déterminée pour une position horizontale donnée par le produit des projections verticales par la variance verticale de l'image différentielle.

12. Procédé selon la revendication 11, dans lequel chaque fonction est lissée avec un filtre passe-bas avant la détermination du pic concerné.

13. Procédé selon la revendication 11 ou 12, dans lequel
on détermine au moins un pic dans la fonction dépendant de la position verticale, et on détermine au moins un pic dans la fonction dépendant de la position horizontale, et
des mouvements intrinsèques sont constatés si ces pics dans le sens vertical et/ou horizontal se situent à l'intérieur de limites prédéfinies, qui sont données par l'allongement vertical et/ou horizontal d'au moins une zone dans laquelle des mouvements intrinsèques sont attendus.

14. Procédé selon l'une des revendications 11 à 13, dans lequel

à partir de la fonction dépendant de la position verticale et/ou à partir de la fonction dépendant de la position horizontale, on utilise des segments dont on attend qu'ils soient en relation de symétrie les uns par rapport aux autres et

des mouvements intrinsèques sont constatés si la relation de symétrie peut être vérifiée par une analyse corrélative des segments concernés.

15. Procédé selon la revendication 14, dans lequel les segments dont on attend qu'ils répondent à une relation de symétrie sont normalisés l'un par rapport à l'autre avant l'analyse corrélative.

16. Procédé selon l'une des revendications 11 à 15, dans lequel
on utilise la fonction dépendant de la position verticale et/ou la fonction dépendant de la position horizontale et des mouvements intrinsèques sont constatés s'il ressort d'une analyse corrélative que les valeurs de la fonction dépendant de la position verticale et/ou de la fonction dépendant de la position horizontale présentent une courbe irrégulière sur une zone prédéterminée.

17. Procédé selon l'une des revendications précédentes, dans lequel les mouvements intrinsèques à constater sont des mouvements intrinsèques dans la zone de la tête de la personne à identifier.

18. Procédé selon la revendication 17, dans lequel les mouvements intrinsèques à constater sont des mouvements intrinsèques dans la région de la bouche et/ou la région des joues et/ou la région du nez et/ou la région des yeux de la personne à identifier.

19. Procédé selon la revendication 17 ou 18, dans lequel les mouvements intrinsèques à constater sont des mouvements intrinsèques dans au moins deux régions symétriques l'une par rapport à l'autre de la zone de la tête de la personne à identifier, et dans lequel ces au moins deux régions symétriques l'une par rapport à l'autre sont utilisées pour déterminer l'axe de symétrie de la zone de la tête.

20. Procédé selon la revendication 19, dans lequel on produit au moyen de l'axe de symétrie trouvé une image utilisable pour l'identification d'une personne, sur laquelle une zone de la tête amenée à pivoter parallèlement au front est transformée en une zone de la tête ayant un axe de symétrie pivoté.

21. Procédé selon la revendication 19 ou 20, dans lequel on produit au moyen de l'axe de symétrie trouvé une image de la personne à identifier utilisable pour l'identification d'une personne, qui est composée de la zone gauche de la tête et de la zone gauche réfléchie de la tête et/ou de la zone droite de la tête et de la zone droite réfléchie de la tête.

22. Procédé selon l'une des revendications précédentes, dans lequel les zones des images individuelles dans lesquelles des mouvements intrinsèques sont attendus sont extraites des images individuelles avant la constatation de l'authenticité.

23. Procédé selon la revendication 22, dans lequel au moins une image différentielle de deux images individuelles successives de la séquence est utilisée pour l'extraction des zones.

24. Procédé selon la revendication 23, dans lequel une image différentielle qui résulte de la multiplication logique de deux images différentielles successives est utilisée pour l'extraction des zones.

25. Procédé selon la revendication 23 ou 24, dans lequel chaque image différentielle est binarisée avant son utilisation.

26. Procédé selon la revendication 25, dans lequel la binarisation est effectuée au moyen d'une valeur seuil qui est déterminée en utilisant l'arrière-plan.

27. Procédé selon l'une des revendications 22 à 26, dans lequel on extrait la zone de la tête de la personne à identifier.

28. Procédé selon la revendication 27, dans lequel la zone de la tête extraite est transformée à une taille standard prédéterminée pour l'identification d'une personne.

29. Procédé selon la revendication 27 ou 28, dans lequel l'extraction de la zone de la tête comprend la détermination d'au moins deux limites crâniennes dans les images individuelles et/ou les images différentielles concernées, à l'aide desquelles la zone de la tête est extraite des images individuelles et/ou des images différentielles concernées.

30. Procédé selon la revendication 29, dans lequel la détermination de la limite de la tête dans les images individuelles et/ou les images différentielles concernées comprend la détermination de la limite supérieure et inférieure de la tête.

31. Procédé selon la revendication 29, dans lequel la détermination de la limite de la tête dans les images individuelles ou les images différentielles concernées comprend la détermination de la limite supérieure, gauche et droite de la tête.

32. Procédé selon l'une des revendications 29 à 31, dans lequel chaque limite de la tête est définie par une ligne de délimitation de la tête tracée de façon que le contour de la tête se trouve sensiblement entièrement à l'intérieur des lignes de délimitation de la tête.

33. Procédé selon l'une des revendications 30 à 32, dans lequel, pour la détermination de la limite supérieure de la tête on détermine la fonction des projections verticales de l'image différentielle binarisée et
la limite supérieure de la tête est définie par le premier maximum de la valeur de la première dérivée de cette fonction qui se situe au-dessus d'une valeur seuil prescrite.

34. Procédé selon la revendication 33, dans lequel la fonction des projections verticales est lissée avec un filtre passe-bas avant la définition de la limite de la tête.

35. Procédé selon l'une des revendications 30 à 34, dans lequel, pour la détermination de la limite gauche de la tête on détermine la fonction des projections horizontales de l'image différentielle binarisée et
la limite gauche de la tête est définie par le premier maximum de la valeur de la première dérivée de cette fonction qui se situe au-dessus d'une valeur seuil prescrite.

36. Procédé selon l'une des revendications 30 à 34, dans lequel, pour la détermination de la limite gauche de la tête l'image différentielle est divisée en une pluralité de bandes se suivant dans le sens vertical, la première bande aboutissant dans le sens vertical vers le bas au niveau de la limite supérieure de la tête déterminée,
on détermine dans chaque bande la fonction des projections horizontales de l'image différentielle binarisée,
on constitue les valeurs des premières dérivées de la pluralité de fonctions des projections horizontales ainsi obtenues,
on calcule la somme de la pluralité de valeurs ainsi constituée et la limite gauche de la tête est définie comme étant le premier maximum de cette somme qui se situe au-dessus d'une valeur seuil prescrite.

37. Procédé selon la revendication 35 ou 36, dans lequel la fonction et/ou les fonctions des projections horizontales est et/ou sont lissée(s) avec un filtre passe-bas avant la définition de la limite de la tête.

38. Procédé selon l'une des revendications 30 à 37, dans lequel, pour la détermination de la limite droite de la tête on détermine la fonction des projections horizontales de l'image différentielle binarisée et
la limite droite de la tête est définie par le dernier maximum de la valeur de la première dérivée de cette fonction qui se situe au-dessus d'une valeur seuil prescrite.

39. Procédé selon l'une des revendications 30 à 37, dans lequel, pour la détermination de la limite droite de la tête l'image différentielle est divisée en une pluralité de bandes se suivant dans le sens vertical, la première bande aboutissant dans le sens vertical vers le bas au niveau de la limite supérieure de la tête déterminée,
on détermine dans chaque bande la fonction des projections horizontales de l'image différentielle binarisée,
on constitue les valeurs des premières dérivées de la pluralité de fonctions des projections horizontales ainsi obtenues,
on calcule la somme de la pluralité de valeurs ainsi constituée et
la limite droite de la tête est définie comme étant le dernier maximum de cette somme qui se situe au-dessus d'une valeur seuil prescrite.

40. Procédé selon la revendication 38 ou 39, dans lequel la fonction et/ou les fonctions des projections horizontales est et/ou sont lissée(s) avec un filtre passe-bas avant la définition de la limite de la tête.

41. Procédé selon l'une des revendications 29 à 40, dans lequel on n'utilise pour la détermination des limites de la tête deux images individuelles successives et/ou images différentielles obtenues à partir de ces dernières que si un changement entre les deux images individuelles successives se situe dans une zone prédéterminée.

42. Procédé selon la revendication 41, dans lequel on calcule une intensité du mouvement pour la détermination du changement entre deux images individuelles successives.

43. Procédé selon la revendication 42, dans lequel l'intensité du mouvement est essentiellement calculée par la somme des niveaux de gris de l'image différentielle.

44. Procédé selon la revendication 42, dans lequel l'intensité du mouvement est essentiellement calculée par la somme des pixels 1 ou des pixels 0 de l'image différentielle binarisée.

45. Procédé selon l'une des revendications 29 à 44, dans lequel on utilise des limites prédéterminées de la tête pour l'extraction de la zone de la tête si aucune limite de la tête ne peut être déterminée.

46. Procédé selon l'une des revendications 29 à 44, dans lequel on utilise des limites prédéterminées de la tête pour l'extraction de la zone de la tête si une des limites de la tête déterminée ne se situe par à l'intérieur de limites prédéterminées.

47. Procédé selon l'une des revendications 30 à 46, dans lequel la limite inférieure et/ou droite et inférieure est définie de telle façon qu'une zone quadratique de la tête est extraite des images individuelles et/ou images différentielles concernées.

48. Procédé selon l'une des revendications précédentes, dans lequel on constitue à partir de deux images individuelles successives une image différentielle stabilisée qui est utilisée pour la détermination des mouvements intrinsèques et/ou pour l'extraction des zones dans lesquelles des mouvements intrinsèques doivent être déterminés.

49. Procédé selon la revendication 48, dans lequel la stabilisation est effectuée au moyen d'une correction corrélative.

50. Procédé selon la revendication 49, dans lequel la correction corrélative comprend une mise en correspondance.

51. Procédé selon la revendication 50, dans lequel la mise en correspondance comprend un calcul de l'image différentielle, en ce que pour le calcul de l'image différentielle, la première image individuelle utilisée pour la constitution de l'image différentielle est décalée par rapport à la deuxième image individuelle utilisée pour la constitution de l'image différentielle de telle façon qu'une fonction de corrélation entre les deux images individuelles est maximale.

52. Procédé selon l'une des revendications précédentes, dans lequel on n'utilise pour la détermination des mouvements intrinsèques deux images individuelles successives et/ou images différentielles obtenues à partir de ces dernières que si un changement entre les deux images individuelles successives se situe dans une zone prédéterminée.

53. Procédé selon la revendication 52, dans lequel on calcule une intensité du mouvement pour la détermination du changement entre deux images individuelles successives.

54. Procédé selon la revendication 53, dans lequel l'intensité du mouvement est essentiellement calculée par la somme des niveaux de gris de l'image différentielle.

55. Procédé selon la revendication 53, dans lequel l'intensité du mouvement est essentiellement calculée par la somme des pixels 1 ou des pixels 0 de l'image différentielle binarisée.

S110 —| Aufnehmen einer Sequenz zeitlich aufeinander folgender Einzelbilder K(t), t=1,...,n einer Person

S120 —| Auswählen zweier zeitlich aufeinander folgender Einzelbilder K(t-1) und K(t) aus der Sequenz

S130 —| Ergibt ein Vergleich der Einzelbilder K(t-1) und K(t), daß intrinsische Bewegungen der Person zwischen beiden Einzelbildern K(t-1) und K(t) stattgefunden haben?

ja

nein

Authentizität der aufgenommenen Einzelbilder K(t-1) und K(t) verifiziert!

Authentizität der aufgenommenen Einzelbilder K(t-1) und K(t) nicht verifiziert!

S170

S180

S190 (optional)

Fig. 1

**S120**

S230 — Bestimmung Differenzbild: $D(t)=K(t)-K(t-1)$

Optional

S240 — Binärisierung: $B_\delta(t)=\Theta(D(t)-\delta)$

S250 — Ermitteln eines Bereichs erhöhter Bewegung in dem Differenzbild $D(t)$ bzw. dem binärisierten Differenzbild $B(t)$

S260 — Stimmt der Bereich erhöhter Bewegung mit einem vorgegebenen Bereich, in dem intrinsische Bewegungen zu erwarten sind, zB Mundregion $\wedge/\vee$ Backenregion $\wedge/\vee$ Nasenregion $\wedge/\vee$ Augenregion, überein?

ja

nein

**S170**

**S180**

# Fig.2

**S230 bzw. S240**

S350 — Bestimmen der Funktion $Y_V$ der Produkte aus den Horizontalprojektionen $P_H$ und den Horizontalvarianzen $V_H$ von D(t) bzw. B(t)

S351 — Bestimmen der Funktion $Y_H$ der Produkte aus den Vertikalprojektionen $P_V$ und den Vertikalvarianzen $V_V$ von D(t) bzw. B(t)

optional

S352 — Glättung mit Tiefpaßfilter TPF:
$$Y_V \rightarrow TPF\{Y_V\}$$
$$Y_H \rightarrow TPF\{Y_H\}$$

S353 — Peaks von $Y_V$ definieren vertikale und Peaks von $Y_H$ horizontale Ausdehnung und Position des Bereichs erhöhter Bewegung

**S260**

Fig.3

S260

S461 —— Ermitteln eines weiteren Bereichs erhöhter Bewegung nach **S250** bzw. nach **S350 bis S353,** von dem erwartet wird, daß er mit dem Bereich erhöhter Bewegung aus **S260** in einer Symmetriebeziehung steht

S462 —— Kann mittels einer Korrelationsanalyse veri- fiziert werden, daß die Symmetriebeziehung erfüllt ist?

ja
S170

nein
S180

# Fig.4

S120

S530 — Bestimmung Differenzbild: $D(t)=K(t)-K(t-1)$

optional

S540 — Binärisierung: $B_\delta(t)=\Theta(D(t)- \delta)$

S550 — Bestimmen der vertikalen Position und Ausdehnung und der horizontalen Position und Ausdehnung der Mundregion aus $D(t)$ / $B(t)$

S560 — Liegt die ermittelte Mundregion innerhalb vorbestimmter Grenzen

ja                                     nein

S170          und / oder          S180

S565 — Folgt aus einer Korrelationsanalyse der Mundregion ein Vorliegen intrinsischer Bewegungen in der Mundregion?

ja                                     nein

S170                              S180

Fig.5

**S530 bzw. S540**

S650 —
> Bestimmen der Funktion $Y_V$ der Produkte aus den Horizontalprojektionen $P_H$ und den Horizontalvarianzen $V_H$ von D(t) bzw. B(t)

S651 —
> Peak der Funktion $Y_V$ definiert vertikale Position und die vertikale Ausdehnung [t, b] der Mundregion

S652 —
> Bestimmen der Funktion $Y_{H;\,[t,b]}$ der Produkte aus den Vertikalprojektionen $P_{V;\,[t,b]}$ und den Vertikalvarianzen $V_{V;[t,b]}$ von D(t) bzw. B(t) im Bereich der vertikalen nach **S651** ermittelten Ausdehnung [t, b]

S653 —
> Peaks von $Y_{H;[t,b]}$ definieren horizontale Ausdehnung und Position der Mundregion

**S560**

**Fig.6**

**S530 bzw. S540, S650 bis S 653 und S560**

S766 — Zerlegen der Funktion $Y_V$ und/oder $Y_H$ in Abschnitte, von denen erwartet wird, daß sie in einer Symmetriebeziehung(en) zueinander stehen

S767 — Kann mittels einer Korrelationsanalyse verifiziert werden, daß die Symmetriebeziehung(en) erfüllt ist(sind)?

ja → S170    und / oder    nein → S180

optional

S768 — Zerlegen der Funktion $Y_V$ und/oder $Y_H$ in vorbestimmte Abschnitte

S769 — Kann mittels einer Korrelationsanalyse verifiziert werden, daß die Werte der Funktion $Y_V$ und/oder $Y_H$ in ihrem(ihren) Definitionsbereich(en) bzw. den vorbestimmten Abschnitten im wesentlichen ungleichmäßig sind?

ja → S170    nein → S180

Fig.7

**S110**

| S120 | Auswählen zweier zeitlich aufeinander folgender Einzelbilder K(t-1) und K(t) aus der Sequenz |

| S825 | Liegt die Veränderung zwischen den Einzelbildern K(t-1) und K(t) in einem vorgegebenen Bereich? |

ja     nein

**und / oder**

| S826 | Kann wenigstens ein Bereich, in dem intrinsische Bewegungen erwartet werden, aus den Einzelbildern K(t-1) und K(t) extrahiert werden? |

ja     nein

**und / oder**

| S827 | Können die Einzelbilder K(t-1) und K(t) stabilisiert werden? |

ja     nein

**S130, S230, S530**

**Fig. 8**

**S120 bzw. S825**

↓ optional

S920 — Liegt die Veränderung zwischen den Einzelbildern K(t-1) und K(t) in einem vorgegebenen Bereich?

S921 — Bestimmung Differenzbild: $D(t) = K(t) - K(t-1)$

S922 — Ermitteln der oberen Kopfgrenze

S923 — Ermitteln der linken und rechten Kopfgrenze

S924 — Festlegen der unteren Kopfgrenze durch die gemäß **S921, S922 und S923** ermittelten Kopfgrenzen, so daß durch die Kopfgrenzen ein quadratischer Bereich umschlossen wird

**S826**

Fig.9